(19) Europäisches Patentamt / European Patent Office / Office européen des brevets

(11) **EP 4 203 578 A1**

(12) **EUROPEAN PATENT APPLICATION**
published in accordance with Art. 153(4) EPC

(43) Date of publication:
**28.06.2023 Bulletin 2023/26**

(21) Application number: **20953714.1**

(22) Date of filing: **18.09.2020**

(51) International Patent Classification (IPC):
**H04W 72/04** *(2023.01)*

(52) Cooperative Patent Classification (CPC):
**H04W 72/04**

(86) International application number:
**PCT/CN2020/116264**

(87) International publication number:
**WO 2022/056856 (24.03.2022 Gazette 2022/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
• **CHEN, Lei**
 **Shenzhen, Guangdong 518129 (CN)**
• **LIU, Fengwei**
 **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **METHOD AND APPARATUS FOR TRANSMITTING PHYSICAL DOWNLINK CONTROL CHANNEL**

(57) This application provides a physical downlink control channel transmission method and an apparatus. A terminal device obtains first indication information, where the first indication information indicates a time-frequency resource position of a first system information block 1 physical downlink control channel SIB1-PDCCH and an additional SIB1-PDCCH. The terminal device detects the first SIB1-PDCCH and the additional SIB1-PDCCH at the corresponding time-frequency resource position based on an indication of the first indication information, and obtains a system information block 1 SIB1 based on the detected first SIB1-PDCCH and the additional SIB1-PDCCH. When coverage of a SIB1-PDCCH is insufficient (for example, a higher frequency band), the first SIB1-PDCCH and the additional SIB1-PDCCH can be jointly detected to improve a coverage capability of the SIB1-PDCCH, so that the terminal device obtains a SIB1 message and completes initial access.

FIG. 2

**Description**

**TECHNICAL FIELD**

This application relates to the field of wireless communication technologies, and more specifically, to a physical downlink control channel transmission method and an apparatus.

**BACKGROUND**

A large-scale antenna system technology may significantly improve a capacity and a coverage capability of a wireless communication system. In a new radio (new radio, NR) system, a base station may be equipped with dozens or even hundreds of antenna array elements, to benefit from higher system capacity and larger system coverage by using a massive MIMO (multiple-input multiple-output) technology. Large-scale antennas essentially mean that a large quantity of transmit antennas are used to send a signal based on channel characteristics of a transmitting end and a receiving end, so that the channel characteristics are better matched to obtain a gain. A common matching manner is, for example, beam transmission or frequency domain precoding. Therefore, a prerequisite for implementing a large-scale antenna gain is obtaining channel characteristic information.

For a data channel serving user equipment, the user equipment and the base station may perform a channel state information (channel state information, CSI) estimation procedure, so that channel characteristic information can be accurately obtained for massive MIMO transmission.

For a broadcast channel, because information transmitted by the base station serves all user equipment (including potential user equipment that is not accessed), the base station has almost no channel state information of a channel between the user equipment. As a result, broadcast information is transmitted only in a simple sending manner. For example, the broadcast information is divided into several beams and sent. Consequently, a coverage capability of the broadcast channel is weaker than that of the data channel.

A broadcast channel involved in an initial access process includes a synchronization signal block (synchronization signal block, SSB), a physical downlink control channel (physical downlink control channel, PDCCH), and a physical downlink data channel (physical downlink shared channel, PDSCH). To access a network, user equipment first needs to obtain a system information block (system information block, SIB) 1, where scheduling information of the SIB1 is carried on a system information block 1 physical downlink control channel SIB1-PDCCH.

With emergence of an application or a scenario of a new frequency band, for example, in a scenario of farther cell coverage or a case in which there is a larger path loss on the new frequency band, the user equipment cannot obtain a valid SIB1 message, and cannot complete initial access.

**SUMMARY**

Embodiments of this application provide a physical downlink control channel transmission method and an apparatus.

According to a first aspect, this application provides a physical downlink control channel transmission method. The method includes: obtaining first indication information, where the first indication information indicates a time-frequency resource position of a first system information block 1 physical downlink control channel SIB1-PDCCH and an additional SIB1-PDCCH; and

determining the time-frequency resource position of the first SIB1-PDCCH and the additional SIB1-PDCCH based on the first indication information.

In the foregoing embodiments, the first SIB1-PDCCH may be understood as a SIB1-PDCCH in the existing 3GPP protocol 38.213, and the additional SIB1-PDCCH may be understood as a supplementary SIB1-PDCCH that is added based on the first SIB1-PDCCH. A name of the supplementary SIB1-PDCCH may be the additional SIB1-PDCCH, the supplementary SIB1-PDCCH, or another name. This is not limited in this application. When coverage of a SIB1-PDCCH is insufficient (for example, a higher frequency band), the first SIB1-PDCCH and the additional SIB1-PDCCH are used to improve a coverage capability of the SIB1-PDCCH device.

With reference to the first aspect, in a possible implementation, the method further includes: detecting the first SIB 1-PDCCH and the additional SIB 1-PDCCH based on the first indication information; and

obtaining a system information block 1 SIB1 based on the detected first SIB1-PDCCH and the additional SIB1-PDCCH.

Based on the foregoing solution, when a terminal device cannot detect the first SIB1-PDCCH, the terminal device detects the additional SIB1-PDCCH based on an indication of the first indication information, to complete an initial access process. Alternatively, when the terminal device detects the first SIB1-PDCCH but cannot correctly demodulate scheduling information carried by the first SIB1-PDCCH, the terminal device detects the additional SIB1-PDCCH, to jointly demodulate the detected additional SIB1-PDCCH and the first SIB1-PDCCH, so as to improve reliability of the SIB1-PDCCH, obtain the system information block SIB1, and complete an initial access process.

With reference to the first aspect, in a possible implementation, the time-frequency resource position of the first SIB 1-PDCCH and the additional SIB 1-PDCCH includes a time-frequency resource position of the first SIB1-PDCCH and a time-frequency resource position of the additional SIB1-PDCCH; or an overall (or common) time-frequency resource position of the first SIB1-PDCCH and the additional SIB1-PDCCH.

Based on this solution, the first indication information may indicate both the time-frequency resource position of the first SIB1-PDCCH and the time-frequency resource position of the additional SIB1-PDCCH, and no additional signaling overheads are introduced. Alternatively, the first indication information may indicate the overall time-frequency resource position of the first SIB1-PDCCH and the additional SIB1-PDCCH, and similarly, no additional signaling overheads are introduced. In addition, in both manners, the additional SIB1-PDCCH may be introduced to improve the coverage of the SIB1-PDCCH, and assist the terminal device in completing initial access.

With reference to the first aspect and the possible implementations of the first aspect, the first indication information indicates one or more offsets, and the offset indicates an offset of the time-frequency resource position of the additional SIB1-PDCCH relative to the time-frequency resource position of the first SIB1-PDCCH; or the offset indicates an offset of the time-frequency resource position of the additional SIB1-PDCCH relative to a time-frequency resource position of a synchronization signal block SSB.

One or more time-frequency resource positions of the additional SIB1-PDCCH are obtained based on the one or more offsets.

Each of the one or more offsets includes at least one of a time domain offset and a frequency domain offset.

With reference to the first aspect and the possible implementations of the first aspect, a quantity of symbols occupied by the first SIB 1-PDCCH and the additional SIB 1-PDCCH as a whole is greater than a quantity of symbols occupied by the first SIB1-PDCCH in time domain, and a quantity of resource blocks RBs occupied in frequency domain is greater than or equal to a quantity of RBs occupied by the first SIB1-PDCCH in frequency domain; or a quantity of RBs occupied in frequency domain at the overall time-frequency resource position occupied by the first SIB1-PDCCH and the additional SIB1-PDCCH as a whole is greater than a quantity of RBs occupied by the first SIB1-PDCCH in frequency domain, and a quantity of symbols occupied in time domain is greater than or equal to a quantity of symbols occupied by the first SIB1-PDCCH in time domain.

A time domain resource occupied by the first SIB1-PDCCH and the additional SIB 1-PDCCH as a whole is at least one of symbols whose index numbers are 0 to 2.

Based on the foregoing solution, a problem that the time-frequency resource position of the additional SIB1-PDCCH conflicts with that of another resource (for example, a SIB1-PDSCH, a DMRS, or the first SIB1-PDCCH) can be avoided, and an unnecessary detection behavior of the terminal device is reduced.

With reference to the first aspect and the possible implementations of the first aspect, the time-frequency resource position of the additional SIB 1-PDCCH does not overlap one or more of the time-frequency resource position of the first SIB1-PDCCH, the time-frequency resource position of the synchronization signal block SSB, a time-frequency resource position of a system information block 1 physical downlink data channel SIB1-PDSCH, and a time-frequency resource position of a system information block 1 physical downlink data channel demodulation reference signal SIB1-PDSCH DMRS.

With reference to the first aspect and the possible implementations of the first aspect, when there are a plurality of offsets, the terminal device detects a plurality of time-frequency resource positions that are respectively indicated by the plurality of offsets and that are of the additional SIB1-PDCCH, and stops until the additional SIB1-PDCCH is detected.

Based on the foregoing solution, the plurality of offsets may be predefined in a protocol, and the terminal device may perform blind detection on the plurality of time-frequency resource positions that are respectively indicated by the plurality of offsets and that are of the additional SIB1-PDCCH. The terminal device assumes that only one of the plurality of time-frequency resource positions respectively corresponding to the plurality of offsets is transmitted. A flexible configuration of the plurality of offsets increases a probability that the terminal device detects the additional SIB1-PDCCH. For example, when a candidate time-frequency position that is indicated by an offset and that is of the additional SIB1-PDCCH is not detected, a candidate time-frequency position that is indicated by another offset and that is of the additional SIB1-PDCCH may be detected. In addition, an indication of the plurality of offsets also improves flexibility of sending the additional SIB 1-PDCCH by a network device.

With reference to the first aspect and the possible implementations of the first aspect, the first indication information is carried on a broadcast channel PBCH.

With reference to the first aspect and the possible implementations of the first aspect, the first indication information is carried in a specific SSB. To be specific, the terminal device receives a specific SSB signal, where the specific SSB signal carries the first indication information.

For example, the specific SSB signal carries the first indication information, and the first indication information indicates the time-frequency resource position of the first SIB 1-PDCCH and the additional SIB 1-PDCCH. An indication manner of the time domain resource position of the first SIB 1-PDCCH and the additional SIB 1-PDCCH may be the same as an indication manner of the first SIB1-PDCCH in the protocol 38.213. For example, the first indication information is an index of a control resource set and search space, and the time-frequency resource position of the first SIB1-PDCCH and the additional SIB1-PDCCH is obtained based on specific configuration information indicated by the index.

With reference to the first aspect and the possible implementations of the first aspect, the specific SSB signal includes at least one of the following information:

a primary synchronization signal of a specific sequence, a secondary synchronization signal of a specific sequence, a PBCH demodulation reference signal of a specific sequence, a special SSB structure, a special SSB time-frequency position, a synchronization signal SS of a specific frequency offset, or a PBCH of a specific frequency offset.

With reference to the first aspect and the possible implementations of the first aspect, a candidate time-frequency resource position of the additional SIB1-PDCCH overlaps one of a candidate time-frequency resource position of the first SIB1-PDCCH, the time-frequency resource position of the synchronization signal block SSB, the time-frequency resource position of the system information block 1 physical downlink data channel SIB1-PDSCH, and the time-frequency resource position of a system information block 1 physical downlink data channel demodulation reference signal SIB1-PDSCH DMRS. The terminal device does not detect the additional SIB1-PDCCH at the time-frequency resource position of the additional SIB1-PDCCH.

Based on the foregoing solution, when the time-frequency resource position of the additional SIB1-PDCCH overlaps one of the foregoing resource positions, the terminal device assumes that the additional SIB1-PDCCH is not transmitted at the time-frequency resource position of the additional SIB1-PDCCH.

With reference to the first aspect and the possible implementations of the first aspect, a frequency domain resource start position of the additional SIB 1-PDCCH is the same as a frequency domain resource start position of an SSB corresponding to the first SIB1-PDCCH.

Based on the foregoing solution, the terminal device may determine the time-frequency resource position of the additional SIB 1-PDCCH based on a time-frequency resource position relationship between the additional SIB1-PDCCH and the SSB.

With reference to the first aspect and the possible implementations of the first aspect, the additional SIB 1-PDCCH is transmitted by default on a predetermined frequency band or frequency.

Based on the foregoing solution, in a scenario in which the coverage of the SIB1-PDCCH is severely insufficient (for example, a higher frequency band 6 GHz or farther cell coverage), the additional SIB1-PDCCH is transmitted by default, so that the coverage of the SIB1-PDCCH is effectively improved, and no additional signaling overheads are required.

With reference to the first aspect and the possible implementations of the first aspect, the method further includes: obtaining second indication information, where the second indication information indicates whether the additional SIB1-PDCCH is transmitted.

Based on the foregoing solution, whether the additional SIB1-PDCCH is transmitted is dynamically indicated by the second indication information. This helps reduce power consumption of the terminal device and improve detection efficiency.

With reference to the first aspect and the possible implementations of the first aspect, the second indication information is carried on the PBCH.

With reference to the first aspect and the possible implementations of the first aspect, the first SIB1-PDCCH carries the second indication information, and the second indication information specifically indicates whether the additional SIB1-PDCCH corresponding to the first SIB 1-PDCCH is transmitted; whether additional SIB1-PDCCHs corresponding to first SIB 1-PDCCHs corresponding to all SSBs are transmitted; or to transmit the additional SIB1-PDCCH in a preset time unit.

With reference to the first aspect and the possible implementations of the first aspect, when the specific SSB signal is received, the additional SIB1-PDCCH is determined to be transmitted.

In the first aspect and the possible implementations of the first aspect, an attribute of the additional SIB 1-PDCCH is the same as an attribute of the first SIB1-PDCCH.

In a possible implementation, the additional SIB 1-PDCCH may be independently demodulated, and the additional SIB1-PDCCH and the first SIB1-PDCCH carry corresponding scheduling information. The corresponding scheduling information includes one or more of the following information: a frequency domain resource of a physical downlink shared channel PDSCH, a time domain resource of the PDSCH, a code rate and a modulation order of the same PDSCH, and a redundancy version of the PDSCH.

The terminal device may assume that a demodulation reference signal sequence of the additional SIB1-PDCCH is the same as a demodulation reference signal sequence of the first SIB 1-PDCCH. The terminal device may alternatively assume that precoding used by the additional SIB1-PDCCH is the same as that used by the first SIB1-PDCCH.

Based on the foregoing solution, the additional SIB1-PDCCH and the first SIB1-PDCCH can be combined for detection.

In addition, the additional SIB 1-PDCCH may be checked by using a radio network temporary identifier SI-RNTI of first system information. Alternatively, the additional SIB1-PDCCH may be checked by using a second SI-RNTI, where the second SI-RNTI is generated based on a cell identifier.

In another possible implementation, the additional SIB 1-PDCCH is a supplementary resource of the first SIB1-PDCCH, and cannot be independently demodulated. The additional SIB1-PDCCH and the first SIB1-PDCCH jointly carry the scheduling information carried by the first SIB1-PDCCH. Rate matching is performed on the first SIB1-PDCCH and the additional SIB1-PDCCH as a whole.

Based on the foregoing solution, the additional SIB1-PDCCH is a supplementary resource of the first SIB1-PDCCH. In a scenario in which the first SIB1-PDCCH does not need to be completely extended, a resource overhead configuration is more flexible, and robustness of the SIB 1-PDCCH can be improved.

Further, a detection periodicity of the additional SIB1-PDCCH may be the same as a detection periodicity of the first SIB1-PDCCH. Alternatively, the PBCH or the first SIB1-PDCCH carries third indication information, where the third indication information indicates a detection periodicity of the additional SIB1-PDCCH. For example, the detection periodicity is 20 ms*k, where k is an integer greater than 1, for example, k=2, 4, 8, 16, 32, or 64; or k is a number greater than 0 and less than 1, for example, k=1/2, 1/4, 1/8, 1/10, 1/20, or 1/40.

Based on the foregoing solution, when the detection periodicity of the additional SIB1-PDCCH is less than or equal to the detection periodicity of the first SIB1-PDCCH, the additional SIB1-PDCCH may be received in the detection periodicity of the first SIB1-PDCCH. In other words, the first SIB1-PDCCH and the additional SIB1-PDCCH may be detected in one detection period, and the first SIB1-PDCCH and the additional SIB1-PDCCH are jointly demodulated, to improve the coverage of the SIB1-PDCCH. In addition, the detection periodicity of the additional SIB1-PDCCH is an integer multiple of the detection periodicity of the first SIB1-PDCCH, for example, is 40 ms or 60 ms. This can improve the coverage of the SIB1-PDCCH to some extent, and can reduce signaling overheads.

Further, the additional SIB1-PDCCH and the first SIB1-PDCCH are in a quasi co-located QCL relationship;

the additional SIB 1-PDCCH and an SSB corresponding to the first SIB 1-PDCCH are in a QCL relationship; or
the additional SIB1-PDCCH and the specific SSB signal are in a QCL relationship.

Based on the foregoing solution, for a system in which a network device performs transmission by using a beam or a terminal device needs to select a beam for receiving, based on the foregoing quasi co-located relationship, the terminal device may receive the additional SIB1-PDCCH by using a receive beam for receiving the first SIB1-PDCCH; receive the additional SIB1-PDCCH by using a receive beam for receiving the SSB corresponding to the first SIB1-PDCCH; or receive the additional SIB1-PDCCH by using a receive beam for receiving the specific SSB.

According to a second aspect, this application provides a physical downlink control channel transmission method. The method includes: A network device determines a time-frequency resource position of a first system information block 1 physical downlink control channel SIB 1-PDCCH and an additional SIB 1-PDCCH; and sends first indication information, where the first indication information indicates the time-frequency resource position of the first SIB1-PDCCH and the additional SIB1-PDCCH.

With reference to the second aspect, in a possible implementation, the time-frequency resource position of the first SIB1-PDCCH and the additional SIB1-PDCCH includes: a time-frequency resource position of the first SIB1-PDCCH and a time-frequency resource position of the additional SIB1-PDCCH; or an overall time-frequency resource position of the first SIB1-PDCCH and the additional SIB1-PDCCH.

With reference to the second aspect and the possible implementations of the second aspect, the first indication information includes one or more offsets, and the offset indicates an offset of the time-frequency resource position of the additional SIB1-PDCCH relative to the time-frequency resource position of the first SIB1-PDCCH; or the offset indicates an offset of the time-frequency resource position of the additional SIB1-PDCCH relative to a time-frequency resource position of a synchronization signal block SSB.

With reference to the second aspect and the possible implementations of the second aspect, a quantity of symbols occupied in time domain at the overall time-frequency resource position of the first SIB1-PDCCH and the additional SIB1-PDCCH is greater than a quantity of symbols occupied by the first SIB1-PDCCH in time domain, and a quantity of resource blocks RBs occupied in frequency domain is greater than or equal to a quantity of RBs occupied by the first SIB1-PDCCH in frequency domain; or a quantity of RBs occupied in frequency domain at the overall time-frequency resource position occupied by the first SIB1-PDCCH and the additional SIB1-PDCCH as a whole is greater than a quantity of RBs occupied by the first SIB1-PDCCH in frequency domain, and a quantity of symbols occupied in time domain is greater than or equal to a quantity of symbols occupied by the first SIB 1-PDCCH in time domain.

With reference to the second aspect and the possible implementations of the second aspect, a time domain resource occupied by the first SIB1-PDCCH and the additional SIB1-PDCCH as a whole is at least one of symbols whose index numbers are 0 to 2.

With reference to the second aspect and the possible implementations of the second aspect, a physical broadcast channel PBCH carries the first indication information.

With reference to the second aspect and the possible implementations of the second aspect, the network device sends a specific SSB signal, and the specific SSB signal carries the first indication information.

With reference to the second aspect and the possible implementations of the second aspect, the specific SSB signal includes at least one of the following information:

a primary synchronization signal of a specific sequence, a secondary synchronization signal of a specific sequence, a PBCH demodulation reference signal of a specific sequence, a special SSB structure, a special SSB time-frequency position, a synchronization signal SS of a specific frequency offset, or a PBCH of a specific frequency offset.

With reference to the second aspect and the possible implementations of the second aspect, a frequency domain resource start position of the additional SIB1-PDCCH is the same as a frequency domain resource start position of an SSB corresponding to the first SIB1-PDCCH, or a frequency domain resource start position of the additional SIB 1-PDCCH is the same as a frequency domain resource start position corresponding to the specific SSB signal.

With reference to the second aspect and the possible implementations of the second aspect, the additional SIB 1-PDCCH is transmitted by default on a predetermined frequency band or frequency.

With reference to the second aspect and the possible implementations of the second aspect, the network device sends second indication information, where the second indication information indicates whether the additional SIB1-PDCCH is transmitted.

With reference to the second aspect and the possible implementations of the second aspect, a PBCH carries the second indication information.

With reference to the second aspect and the possible implementations of the second aspect, the first SIB1-PDCCH carries the second indication information, and the second indication information specifically indicates whether the additional SIB 1-PDCCH corresponding to the first SIB 1-PDCCH is transmitted; whether additional SIB 1-PDCCHs corresponding to first SIB 1-PDCCHs corresponding to all SSBs are transmitted; or to transmit the additional SIB1-PDCCH in a preset time unit.

With reference to the second aspect and the possible implementations of the second aspect, when the network device sends the specific SSB signal, the additional SIB1-PDCCH is determined to be transmitted.

In the second aspect and the possible implementations of the second aspect, an attribute of the additional SIB1-PDCCH is the same as an attribute of the first SIB1-PDCCH.

In a possible implementation, the additional SIB 1-PDCCH may be independently demodulated, and the additional SIB1-PDCCH and the first SIB1-PDCCH carry corresponding scheduling information. The corresponding scheduling information includes one or more of the following information: a frequency domain resource of a physical downlink shared channel PDSCH, a time domain resource of the PDSCH, a code rate and a modulation order of the PDSCH, and a redundancy version of the PDSCH.

A demodulation reference signal sequence of the additional SIB1-PDCCH may be the same as a demodulation reference signal sequence of the first SIB 1-PDCCH; or precoding used by the additional SIB 1-PDCCH may be the same as that used by the first SIB 1-PDCCH.

In addition, the additional SIB 1-PDCCH may be checked by using a radio network temporary identifier SI-RNTI of first system information. Alternatively, the additional SIB1-PDCCH may be checked by using a second SI-RNTI, where the second SI-RNTI is generated based on a cell identifier.

Optionally, the additional SIB1-PDCCH is a supplementary resource of the first SIB1-PDCCH, and cannot be independently demodulated. The additional SIB1-PDCCH and the first SIB1-PDCCH jointly carry the scheduling information carried by the first SIB 1-PDCCH. Rate matching is performed on the first SIB 1-PDCCH and the additional SIB1-PDCCH as a whole.

Based on the foregoing solution, the additional SIB1-PDCCH is a supplementary resource of the first SIB1-PDCCH. In a scenario in which the first SIB1-PDCCH does not need to be completely extended, a resource overhead configuration is more flexible.

Further, a sending periodicity of the additional SIB 1-PDCCH may be the same as a sending periodicity of the first SIB1-PDCCH. Alternatively, the PBCH or the first SIB1-PDCCH carries third indication information, where the third indication information indicates a sending periodicity of the additional SIB1-PDCCH. For example, the sending periodicity is 20 ms*k, where k is an integer greater than 1, for example, k=2, 4, 8, 16, 32, or 64; or k is a number greater than 0 and less than 1, for example, k=1/2, 1/4, 1/8, 1/10, 1/20, or 1/40.

Further, the additional SIB1-PDCCH and the first SIB1-PDCCH are in a quasi co-located QCL relationship;

the additional SIB 1-PDCCH and an SSB corresponding to the first SIB 1-PDCCH are in a QCL relationship; or
the additional SIB1-PDCCH and the specific SSB signal are in a QCL relationship.

For beneficial effects of the implementations provided in the second aspect of embodiments of this application, refer to beneficial effects of the first aspect and any possible implementation of the first aspect. Details are not described herein again.

According to a third aspect, this application provides a terminal device, configured to perform the method in any possible implementation of the first aspect. The terminal device may be the terminal device in any possible implementation of the first aspect, or a module used in the terminal device, for example, a chip or a chip system. The terminal device includes a module, unit, or means (means) corresponding to the method performed by the terminal device in any possible implementation of the first aspect. The module, unit, or means may be implemented by hardware or software, or may be implemented by hardware executing corresponding software. The hardware or the software includes one or more modules or units corresponding to the function performed by the terminal device in any possible implementation of the first aspect.

With reference to the third aspect, in a possible implementation, the terminal device includes a transceiver unit and a processing unit. The transceiver unit is configured to obtain first indication information, where the first indication information indicates a time-frequency resource position of a first system information block 1 physical downlink control channel SIB1-PDCCH and an additional SIB1-PDCCH.

The processing unit is configured to determine the time-frequency resource position of the first SIB1-PDCCH and the additional SIB1-PDCCH based on the first indication information.

With reference to a possible implementation of the third aspect, the processing unit is further configured to detect the first SIB1-PDCCH and the additional SIB1-PDCCH based on the first indication information; and the processing unit is further configured to obtain a system information block 1 SIB1 based on the detected first SIB1-PDCCH and the additional SIB1-PDCCH.

With reference to a possible implementation of the third aspect, the time-frequency resource position of the first SIB 1-PDCCH and the additional SIB 1-PDCCH includes: a time-frequency resource position of the first SIB1-PDCCH and a time-frequency resource position of the additional SIB 1-PDCCH; or an overall time-frequency resource position of the first SIB1-PDCCH and the additional SIB1-PDCCH.

With reference to a possible implementation of the third aspect, the first indication information includes one or more offsets, and the offset indicates an offset of the time-frequency resource position of the additional SIB1-PDCCH relative to the time-frequency resource position of the first SIB 1-PDCCH; or the offset indicates an offset of the time-frequency resource position of the additional SIB 1-PDCCH relative to a time-frequency resource position of a synchronization signal block SSB.

The processing unit obtains one or more time-frequency resource positions of the additional SIB1-PDCCH based on the one or more offsets.

With reference to a possible implementation of the third aspect, a quantity of symbols occupied in time domain at the overall time-frequency resource position of the first SIB 1-PDCCH and the additional SIB 1-PDCCH is greater than a quantity of symbols occupied by the first SIB1-PDCCH in time domain, and a quantity of resource blocks RBs occupied in frequency domain is greater than or equal to a quantity of RBs occupied by the first SIB1-PDCCH in frequency domain; or a quantity of RBs occupied in frequency domain at the overall time-frequency resource position of the first SIB 1-PDCCH and the additional SIB 1-PDCCH is greater than a quantity of RBs occupied by the first SIB 1-PDCCH in frequency domain, and a quantity of symbols occupied in time domain is greater than or equal to a quantity of symbols occupied by the first SIB 1-PDCCH in time domain.

With reference to a possible implementation of the third aspect, a time domain resource of the first SIB1-PDCCH and the additional SIB 1-PDCCH is at least one of symbols whose index numbers are 0 to 2.

With reference to a possible implementation of the third aspect, the first indication information is carried on a physical broadcast channel PBCH.

With reference to a possible implementation of the third aspect, the transceiver unit receives a specific SSB signal, and the specific SSB signal carries the first indication information.

With reference to a possible implementation of the third aspect, the specific SSB signal includes at least one of the following information:

a primary synchronization signal of a specific sequence, a secondary synchronization signal of a specific sequence, a PBCH demodulation reference signal of a specific sequence, a special SSB structure, a special SSB time-frequency position, a synchronization signal SS of a specific frequency offset, or a PBCH of a specific frequency offset.

With reference to a possible implementation of the third aspect, the additional SIB 1-PDCCH is transmitted by default on a predetermined frequency band or frequency.

With reference to a possible implementation of the third aspect, the transceiver unit obtains second indication information, and the second indication information indicates whether the additional SIB 1-PDCCH is transmitted.

In the third aspect and the possible implementations of the third aspect, an attribute of the additional SIB1-PDCCH is the same as an attribute of the first SIB1-PDCCH.

In a possible implementation, the additional SIB 1-PDCCH may be independently demodulated, and the additional SIB1-PDCCH and the first SIB1-PDCCH carry corresponding scheduling information. The corresponding scheduling information includes one or more of the following information: a frequency domain resource of a physical downlink shared channel PDSCH, a time domain resource of the PDSCH, a code rate and a modulation order of the PDSCH, and a redundancy version of the PDSCH.

The terminal device may assume that a demodulation reference signal sequence of the additional SIB 1-PDCCH is the same as a demodulation reference signal sequence of the first SIB 1-PDCCH. The terminal device may alternatively assume that precoding used by the additional SIB1-PDCCH is the same as that used by the first SIB1-PDCCH.

In addition, the additional SIB 1-PDCCH may be checked by using a radio network temporary identifier SI-RNTI of first system information. Alternatively, the additional SIB1-PDCCH may be checked by using a second SI-RNTI, where the second SI-RNTI is generated based on a cell identifier.

Optionally, the additional SIB1-PDCCH is a supplementary resource of the first SIB 1-PDCCH, and cannot be independently demodulated. The additional SIB1-PDCCH and the first SIB1-PDCCH jointly carry the scheduling information carried by the first SIB 1-PDCCH. Rate matching is performed on the first SIB 1-PDCCH and the additional SIB1-PDCCH as a whole.

Further, a detection periodicity of the additional SIB1-PDCCH may be the same as a detection periodicity of the first SIB1-PDCCH. Alternatively, the PBCH or the first SIB1-PDCCH carries third indication information, where the third indication information indicates a detection periodicity of the additional SIB1-PDCCH. For example, the detection periodicity is 20 ms*k, where k is an integer greater than 1, for example, k=2, 4, 8, 16, 32, or 64; or k is a number greater than 0 and less than 1, for example, k=1/2, 1/4, 1/8, 1/10, 1/20, or 1/40.

Further, the additional SIB1-PDCCH and the first SIB1-PDCCH are in a quasi co-located QCL relationship;

the additional SIB 1-PDCCH and an SSB corresponding to the first SIB 1-PDCCH are in a QCL relationship; or
the additional SIB1-PDCCH and the specific SSB signal are in a QCL relationship.

With reference to the third aspect, in another possible implementation, the terminal device includes at least one processor and a transceiver, and optionally further includes a memory. The memory is coupled to the processor or is separated from the processor. The transceiver is configured to receive and send data, and is configured to communicate and interact with another device in a communication system. The memory is configured to store a computer program. The processor is configured to support the terminal device in performing a corresponding function of the terminal device in the first aspect and the possible implementations of the first aspect.

It should be noted that, for beneficial effects of the implementations of the terminal device provided in the third aspect of embodiments of this application, refer to beneficial effects of the first aspect and any possible implementation of the first aspect. Details are not described herein again.

According to a fourth aspect, this application provides a network device, configured to perform the method in any possible implementation of the second aspect. The network device may be the network device in any possible implementation of the second aspect, or a module used in the network device, for example, a chip or a chip system. The network device includes a module, unit, or means (means) corresponding to the method performed by the network device in any possible implementation of the second aspect. The module, unit, or means may be implemented by hardware or software, or may be implemented by hardware executing corresponding software. The hardware or the software includes one or more modules or units corresponding to the function performed by the network device in any possible implementation of the second aspect.

With reference to the fourth aspect, in a possible implementation, the network device includes a transceiver unit and a processing unit. The processing unit is configured to determine a time-frequency resource position of a first system information block 1 physical downlink control channel SIB1-PDCCH and an additional SIB1-PDCCH.

The transceiver unit is configured to send first indication information, where the first indication information indicates the time-frequency resource position of the first SIB 1-PDCCH and the additional SIB 1-PDCCH.

With reference to a possible implementation of the fourth aspect, the time-frequency resource position of the first SIB1-PDCCH and the additional SIB1-PDCCH includes: a time-frequency resource position of the first SIB1-PDCCH and a time-frequency resource position of the additional SIB1-PDCCH; or an overall time-frequency resource position of the first SIB 1-PDCCH and the additional SIB 1-PDCCH.

With reference to a possible implementation of the fourth aspect, the first indication information includes one or more offsets, and the offset indicates an offset of the time-frequency resource position of the additional SIB1-PDCCH relative to the time-frequency resource position of the first SIB 1-PDCCH; or the offset indicates an offset of the time-frequency resource position of the additional SIB 1-PDCCH relative to a time-frequency resource position of a synchronization signal block SSB.

With reference to a possible implementation of the fourth aspect, a quantity of symbols occupied in time domain at the overall time-frequency resource position of the first SIB 1-PDCCH and the additional SIB 1-PDCCH is greater than a quantity of symbols occupied by the first SIB1-PDCCH in time domain, and a quantity of resource blocks RBs occupied in frequency domain is greater than or equal to a quantity of RBs occupied by the first SIB1-PDCCH in frequency domain; or a quantity of RBs occupied in frequency domain at the overall time-frequency resource position of the first SIB 1-PDCCH and the additional SIB 1-PDCCH is greater than a quantity of RBs occupied by the first SIB 1-PDCCH in frequency domain, and a quantity of symbols occupied in time domain is greater than or equal to a quantity of symbols occupied by the first SIB 1-PDCCH in time domain.

With reference to a possible implementation of the fourth aspect, a time domain resource of the first SIB1-PDCCH and the additional SIB1-PDCCH is at least one of symbols whose index numbers are 0 to 2.

With reference to a possible implementation of the fourth aspect, a physical broadcast channel PBCH carries the first indication information.

With reference to a possible implementation of the fourth aspect, the transceiver unit sends a specific SSB signal, and the specific SSB signal carries the first indication information.

With reference to a possible implementation of the fourth aspect, the specific SSB signal includes at least one of the following information:

a primary synchronization signal of a specific sequence, a secondary synchronization signal of a specific sequence, a PBCH demodulation reference signal of a specific sequence, a special SSB structure, a special SSB time-frequency position, a synchronization signal SS of a specific frequency offset, or a PBCH of a specific frequency offset.

With reference to a possible implementation of the fourth aspect, the additional SIB1-PDCCH is transmitted by default on a predetermined frequency band or frequency.

With reference to a possible implementation of the fourth aspect, the transceiver unit obtains second indication information, and the second indication information indicates whether the additional SIB1-PDCCH is transmitted.

In the fourth aspect and the possible implementations of the fourth aspect, an attribute of the additional SIB1-PDCCH is the same as an attribute of the first SIB1-PDCCH.

In a possible implementation, the additional SIB1-PDCCH may be independently demodulated, and the additional SIB1-PDCCH and the first SIB1-PDCCH carry corresponding scheduling information. The corresponding scheduling information includes one or more of the following information: a frequency domain resource of a physical downlink shared channel PDSCH, a time domain resource of the PDSCH, a code rate and a modulation order of the PDSCH, and a redundancy version of the PDSCH.

A demodulation reference signal sequence of the additional SIB1-PDCCH may be the same as a demodulation reference signal sequence of the first SIB1-PDCCH; or precoding used by the additional SIB1-PDCCH may also be the same as that used by the first SIB1-PDCCH.

In addition, the additional SIB1-PDCCH may be checked by using a radio network temporary identifier SI-RNTI of first system information. Alternatively, the additional SIB1-PDCCH may be checked by using a second SI-RNTI, where the second SI-RNTI is generated based on a cell identifier.

Optionally, the additional SIB1-PDCCH is a supplementary resource of the first SIB1-PDCCH, and cannot be independently demodulated. The additional SIB1-PDCCH and the first SIB1-PDCCH jointly carry the scheduling information carried by the first SIB 1-PDCCH. Rate matching is performed on the first SIB 1-PDCCH and the additional SIB1-PDCCH as a whole.

Further, a sending periodicity of the additional SIB 1-PDCCH may be the same as a sending periodicity of the first SIB1-PDCCH. Alternatively, the PBCH or the first SIB1-PDCCH carries third indication information, where the third indication information indicates a sending periodicity of the additional SIB1-PDCCH. For example, the sending periodicity is 20 ms*k, where k is an integer greater than 1, for example, k=2, 4, 8, 16, 32, or 64; or k is a number greater than 0 and less than 1, for example, k=1/2, 1/4, 1/8, 1/10, 1/20, or 1/40.

Further, the additional SIB1-PDCCH and the first SIB1-PDCCH are in a quasi co-located QCL relationship;

the additional SIB 1-PDCCH and an SSB corresponding to the first SIB 1-PDCCH are in a QCL relationship; or the additional SIB1-PDCCH and the specific SSB signal are in a QCL relationship.

With reference to the fourth aspect, in another possible implementation, the network device includes at least one processor and a transceiver, and optionally further includes a memory. The memory is coupled to the processor or is separated from the processor. The transceiver is configured to receive and send data, and is configured to communicate and interact with another device in a communication system. The memory is configured to store a computer program. The processor is configured to support the network device in performing a corresponding function of the network device in the second aspect and the possible implementations of the second aspect.

It should be noted that, for beneficial effects of the implementations of the network device provided in the fourth aspect of embodiments of this application, refer to beneficial effects of the second aspect and any possible implementation of the second aspect. Details are not described herein again.

According to a fifth aspect, this application provides a chip system. The chip system includes a logic circuit and an input/output interface, the input/output interface is configured to input or output a signal or data, and the logic circuit is configured to perform the first aspect and any possible implementation of the first aspect.

According to a sixth aspect, this application provides a chip system. The chip system includes a logic circuit and an input/output interface, the input/output interface is configured to input or output a signal or data, and the logic circuit is configured to perform the second aspect and any possible implementation of the second aspect.

According to a seventh aspect, this application provides a computer-readable storage medium, where the computer-readable storage medium stores a computer program. When the computer program is executed by a processor, some or all steps of the method according to the first aspect, the second aspect, and any possible implementation of the first aspect and the second aspect are performed.

According to an eighth aspect, this application provides a computer program product including executable instructions. When the computer program product runs on a computer, the method in either of the first aspect and the second aspect and the corresponding possible implementations is performed.

According to a ninth aspect, this application further provides a communication apparatus. The apparatus may exist in a product form of a chip. A structure of the apparatus includes a processor, and may further include a memory. The memory is configured to be coupled to the processor, and store a program (instructions) and data that are necessary for the apparatus. The processor is configured to execute the computer program stored in the memory, to support the communication apparatus in performing the method in either of the first aspect and the second aspect and the corresponding possible implementations. Optionally, the memory may be located in the processor, and is an internal storage. Alternatively, the memory may be located outside the processor, is coupled to the processor, and is an external storage.

According to a tenth aspect, this application further provides a communication system. The communication system includes a terminal device and a network device. The terminal device is configured to perform the method according to the first aspect and any possible implementation of the first aspect, and the network device is configured to perform the method according to the second aspect and any possible implementation of the second aspect.

## BRIEF DESCRIPTION OF DRAWINGS

FIG. 1A is a schematic diagram of a structure of a communication system according to an embodiment of this application;

FIG. 1B is a schematic diagram of a structure of another communication system according to an embodiment of this application;

FIG. 1C-1 and FIG. 1C-2 are a schematic diagram of a structure of another communication system according to an embodiment of this application;

FIG. 2 is a schematic flowchart of a physical downlink control channel transmission method according to an embodiment of this application;

FIG. 3A to FIG. 3L are schematic diagrams of time-frequency resource distribution of an additional SIB1-PDCCH and a first SIB1-PDCCH according to an embodiment of this application;

FIG. 4 is a schematic diagram of rate matching of an extended SIB1-PDCCH according to an embodiment of this application;

FIG. 5A is a schematic diagram of a structure of a communication apparatus according to an embodiment of this application;

FIG. 5B is a schematic diagram of a structure of another communication apparatus according to an embodiment of this application;

FIG. 6 is a schematic diagram of a structure of a terminal device according to an embodiment of this application;

FIG. 7 is a schematic diagram of a structure of a network device according to an embodiment of this application; and

FIG. 8 is a schematic diagram of a structure of a chip according to an embodiment of this application.

## DESCRIPTION OF EMBODIMENTS

The following describes the technical solutions in embodiments of this application with reference to the accompanying drawings in embodiments of this application.

In the specification, claims, and accompanying drawings of this application, the terms "first", "second", "third", "fourth" and so on are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in this specification means that a particular feature, structure, or characteristic described with reference to this embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

"A plurality of" refers to two or more than two. The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects.

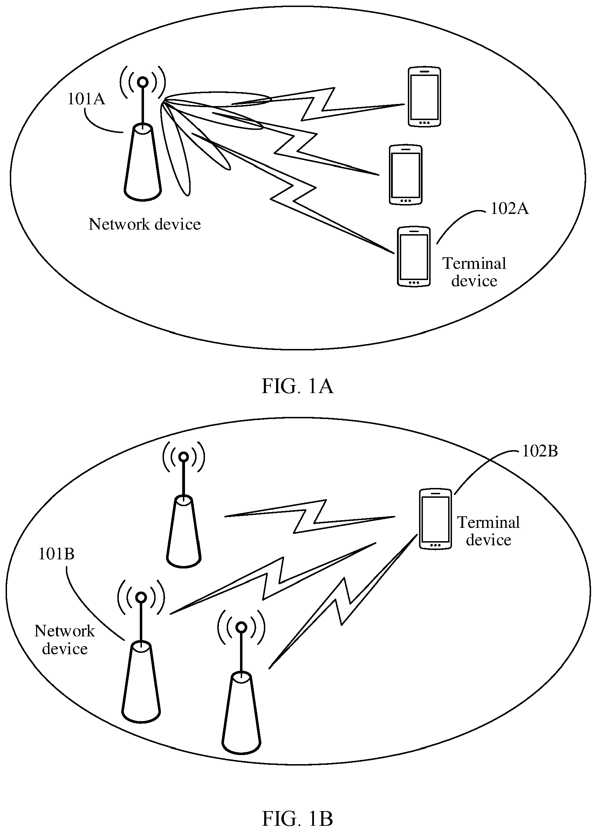

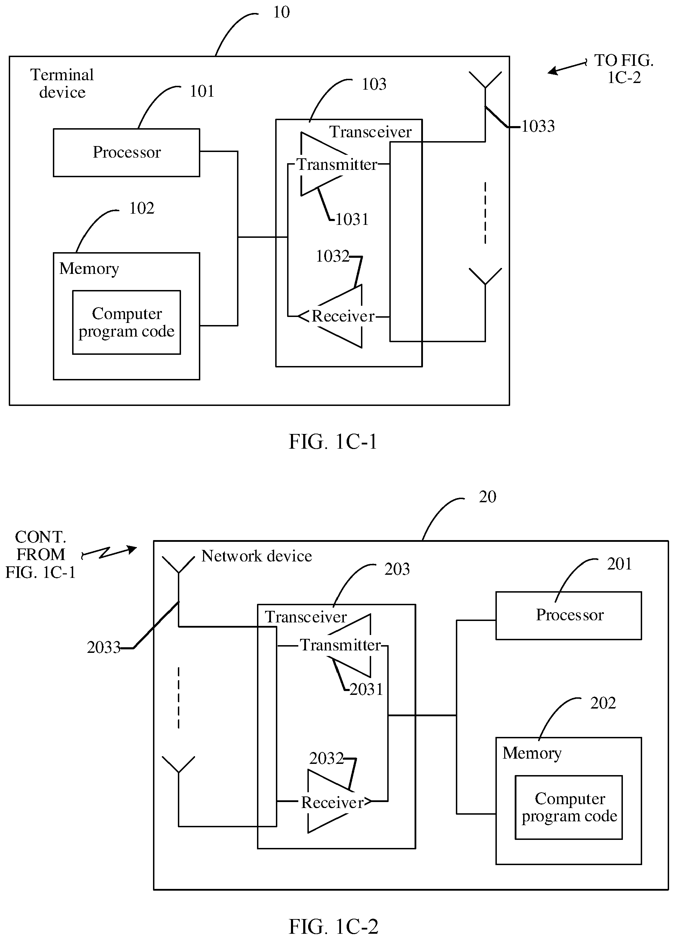

A communication system in embodiments of this application is first described. FIG. 1 is a frame diagram of a communication system according to an embodiment of this application. A communication method provided in this application is applicable to the communication system shown in FIG. 1, for example, a long term evolution (Long Term Evolution, LTE) system or a 5G NR system, or another future communication system. This is not limited herein. As shown in FIG. 1A and FIG. 1B, for example, the communication system in embodiments of this application includes a network device and a terminal device. A communication system in FIG. 1A includes a single network device and a plurality of terminal devices, and the single network device may transmit data or control signaling to a single terminal device or the plurality of terminal devices. A communication system in FIG. 1B includes a plurality of network devices and a single terminal device, and the plurality of network devices may simultaneously transmit data or control signaling to the single terminal device. It should be noted that, during actual application, the communication system may further include another communication network element, and a quantity of terminal devices and a quantity of network devices are determined based on an actual scenario. FIG. 1A and FIG. 1B are merely examples, and do not constitute a limitation.

For example, FIG. 1C-1 and FIG. 1C-2 are an implementation of communication between the terminal device and the network device in FIG. 1A or FIG. 1B. A terminal device 10 includes a processor 101, a memory 102, and a transceiver 103. The transceiver 103 includes a transmitter 1031, a receiver 1032, and an antenna 1033. A network device 20 includes a processor 201, a memory 202, and a transceiver 203. The transceiver 203 includes a transmitter 2031 and a receiver 2032. Optionally, the network device 20 further includes an antenna 2033. The antenna 2033 may be integrated into the network device 20, or may be a remote antenna or a distributed antenna. The receiver 1032 may be configured to receive information through the antenna 1033, and the transmitter 1031 may be configured to send information to the network device 20 through the antenna 1033. The transmitter 2031 may be configured to send information to the terminal device 10 through the antenna 2033. The receiver 2032 may be configured to receive, through the antenna 2033, information sent by the terminal device 10.

The network device may be a base station or an access point, or may be a device that is in an access network and that communicates with a wireless terminal device over an air interface through one or more sectors. The base station may be configured to perform conversion between a received over-the-air frame and an IP packet, and serves as a router between the wireless terminal device and the remaining of the access network. The remaining of the access network may include an Internet Protocol (IP) network. The base station may coordinate attribute management of the air interface. The base station may be an evolved NodeB (evolved NodeB, eNB or eNodeB) in long term evolution (long term evolution, LTE), a relay station or an access point, a base station (gNB) in a 5G network, an integrated access and backhaul (integrated access and backhaul, IAB) node, or the like. This is not limited herein.

The terminal device in embodiments of this application is an entity that is on a user side and that is configured to receive or transmit a signal. The terminal device may be a device that provides a user with voice and/or data connectivity, for example, a handheld device having a wireless connection function, or a processing device connected to a wireless modem. The terminal device may communicate with a core network via a radio access network (radio access network, RAN), and exchange a voice and/or data with the RAN. The terminal device may include user equipment (user equipment, UE), a wireless terminal device, a mobile terminal device, a device-to-device (device-to-device, D2D) communication terminal device, a vehicle-to-everything (vehicle-to-everything, V2X) terminal device, a machine-to-machine/machine-type communication (machine-to-machine/machine-type communication, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (which is also referred to as a "cellular" phone), a computer with a mobile terminal device, or a portable, pocket-sized, handheld, or computer built-in mobile apparatus. For example, the terminal device may be a device such as a personal communications service (personal communications service, PCS) phone, a cordless telephone set, a session initiation protocol (session initiation protocol, SIP) phone, a wireless local loop (wireless local loop, WLL) station, or a personal digital assistant (personal digital assistant, PDA). The terminal device may alternatively include a limited device, for example, a device with relatively low power consumption, a device with a limited storage capability, or a device with a limited computing capability. For example, the terminal device includes an information sensing device, for example, a barcode, radio frequency identification (radio frequency identification, RFID), a sensor, a global positioning system (global positioning system, GPS), or a laser scanner.

As an example instead of a limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that dedicated to only one type of application function and need to collaboratively work with other devices such as smartphones, for example, various smart bands, smart helmets, or smart jewelry for monitoring physical signs.

If the various terminal devices described above are located in a vehicle (for example, placed in the vehicle or installed in the vehicle), the terminal devices may be all considered as vehicle-mounted terminal devices. For example, the vehicle-mounted terminal devices are also referred to as on board units (on board units, OBUs).

In NR, a primary synchronization signal (primary synchronization signal, PSS), a secondary synchronization signal (secondary synchronization signal, SSS), and a physical broadcast channel (physical broadcast channel, PBCH) form a synchronization signal/broadcast channel block (SS/PBCH block). The synchronization signal broadcast channel block is sometimes referred to as a synchronization signal block (synchronization signal block, SSB) for short. The SSB is a channel that undertakes a broadcast function, and is for completing an initial access process. A broadcast channel involved in the initial access process further includes a physical downlink control channel (physical downlink control channel, PDCCH) and a physical downlink data channel (physical downlink shared channel, PDSCH) that are for broadcast. The broadcast PDCCH is a control channel that carries scheduling information of broadcast information, and is denoted as a SIB1-PDCCH. The broadcast information mainly refers to system information, for example, a system information block (system information block, SIB). The scheduling information of the broadcast information indicates a resource on which a terminal device receives data information of a SIB1. The PDSCH for broadcast is a data channel that carries the broadcast information, and is denoted as a SIB1-PDSCH. The broadcast channel involved in the initial access process is characterized by carrying the broadcast scheduling information or the broadcast information, and is not a dedicated channel.

An initial access process of a terminal device roughly includes the following steps: (1) performing blind detection on a PSS/SSS, synchronizing cell timing, and obtaining a cell identifier; (2) demodulating a master information block (Master Information Block, MIB) carried on a physical broadcast channel (Physical broadcast Channel, PBCH), where an MIB message includes a system frame number, a subcarrier spacing, and SIB1-PDCCH configuration information (a control resource set indication and a search space indication); and (3) detecting DCI based on a set and search space that are indicated by the SIB1-PDCCH configuration information, where the DCI is scrambled by using an SI-RNTI, and indicates scheduling information of a SIB 1 message, such as a frequency domain resource, a time domain resource allocation, a modulation and coding scheme, or a redundancy version; (4) receiving the SIB1 message based on the scheduling information, where the SIB1 includes cell information, specifically including uplink and downlink bandwidth resource information, a cell SSB resource, or the like.

FIG. 1A is used as an example. In an initial access process, a terminal device 102A needs to receive a system information block SIB1 delivered by a network device 101A. The SIB1 includes cell information, specifically including uplink and downlink bandwidth resource information, a cell synchronization signal block SSB resource, or the like. After obtaining the information, the terminal device 102A completes the initial access process. In this process, the terminal device 102A needs to receive the SIB1 at a corresponding position based on scheduling information. The scheduling information of the SIB1 is carried on a SIB 1-PDCCH. Therefore, to successfully complete initial access, the terminal device 102A needs to first receive the broadcast SIB1-PDCCH. Currently, a coverage capability design of the SIB 1-PDCCH in a 3.5 GHz propagation feature has reached an upper limit. For some new frequency bands, for example, a higher frequency band 6 GHz, a larger path loss is generated, and it is difficult for the SIB1-PDCCH to achieve same coverage. Due to insufficient coverage of the SIB 1-PDCCH, the terminal device 102A cannot correctly demodulate the scheduling information carried in the SIB1-PDCCH. As a result, the terminal device 102A cannot obtain the SIB1 message, and further cannot complete the initial access process.

It should be noted that the insufficient coverage of the SIB1-PDCCH herein may be understood as an insufficient signal-to-noise ratio. In other words, a signal on the SIB 1-PDCCH is weak or the SIB 1-PDCCH is greatly affected by noise.

For a problem that a coverage capability of the SIB 1-PDCCH on a higher frequency band is insufficient, an embodiment of this application provides a SIB1-PDCCH transmission method. In the method, a supplementary SIB1-PDCCH is mainly provided to assist a terminal device in completing an initial access process on the higher frequency band, so that the coverage capability of the SIB 1-PDCCH is improved in an initial access phase, and farther cell coverage can be further implemented. In addition, forward compatibility of an existing terminal device with the method provided in this application is also considered in a specific implementation process.

It should be noted that, in this embodiment of this application, the supplementary SIB1-PDCCH is used as an extra or additional SIB 1-PDCCH transmission resource to improve robustness of an original SIB 1-PDCCH. The original SIB1-PDCCH is a SIB1-PDCCH specified in the 3GPP 38.213 protocol, and the supplementary SIB1-PDCCH is an additional SIB1-PDCCH. In the following description, the original SIB1-PDCCH is correspondingly described as a first SIB 1-PDCCH, and the supplementary SIB 1-PDCCH is correspondingly described as an additional SIB1-PDCCH. This is uniformly described herein, and details are not described again below. In addition, the supplementary SIB 1-PDCCH may also be named in another manner. This is not limited in this application.

A person skilled in the art may understand that the additional SIB 1-PDCCH is used as a supplement to the first SIB1-PDCCH, and the additional SIB1-PDCCH and the first SIB1-PDCCH are correlated. When a terminal device receives the additional SIB-PDCCH and the first SIB1-PDCCH, correlation superposition is performed. However, noise is independent, and only non-correlation superposition can be performed. Therefore, a signal-to-noise ratio of the SIB1-PDCCH can be improved by using the additional SIB1-PDCCH, in other words, the coverage capability of the SIB1-PDCCH is improved.

It should be further noted that a resource block (resource block, RB) in this embodiment of this application is a frequency domain concept. For example, 12 subcarriers are one RB.

In addition, in this embodiment of this application, a time-frequency resource position of the first SIB1-PDCCH or a time-frequency resource position of the additional SIB 1-PDCCH may alternatively be correspondingly understood as a candidate time-frequency resource position of the first SIB1-PDCCH or a candidate time-frequency resource position of the additional SIB1-PDCCH. SIB1-PDCCH detection may be correspondingly understood as blind detection specified in an existing protocol.

The following specifically describes, with reference to the accompanying drawings, a physical downlink control channel transmission method provided in embodiments of this application.

In embodiments of this application, a terminal device and a network device are used as an example. It should be understood that embodiments of this application may alternatively be applied to a chip on a terminal device side, or may be applied to a chip on a network device side.

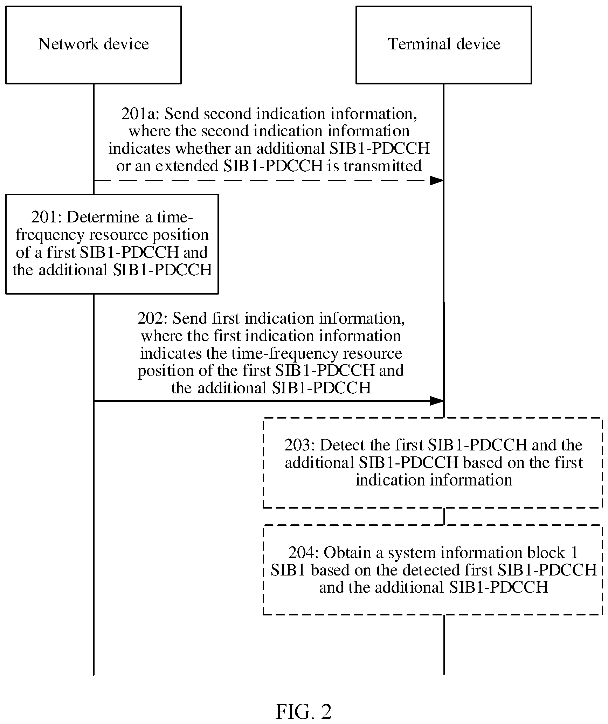

FIG. 2 is a schematic flowchart of a physical downlink control channel transmission method 200 according to an embodiment of this application. The method specifically includes the following steps.

S201: A network device determines a time-frequency resource position of a first SIB 1-PDCCH and an additional SIB1-PDCCH.

S202: The network device sends first indication information, where the first indication information indicates the time-frequency resource position of the first SIB1-PDCCH and the additional SIB1-PDCCH.

Correspondingly, a terminal device receives the first indication information sent by the network device. Optionally, the terminal device may alternatively obtain the first indication information from another terminal device. For example, in a device-to-device (device-to-device, D2D) scenario, information transmission is implemented by using a sidelink (sidelink, SL). A manner in which the terminal device obtains the first indication information is not limited in this application.

The time-frequency resource position of the first SIB1-PDCCH and the additional SIB1-PDCCH includes: a time-frequency resource position of the first SIB1-PDCCH and a time-frequency resource position of the additional SIB1-PDCCH; or an overall time-frequency resource position of the first SIB1-PDCCH and the additional SIB 1-PDCCH. It should be noted that the first SIB 1-PDCCH and the additional SIB 1-PDCCH may be considered as an extended SIB1-PDCCH as a whole. In this case, the first SIB1-PDCCH and the additional SIB1-PDCCH may not be distinguished, but are considered as a whole. The first SIB1-PDCCH and the additional SIB1-PDCCH are correspondingly described as the extended SIB1-PDCCH as a whole in the following, and are uniformly described herein.

It should be noted that before detecting the first SIB1-PDCCH and the additional SIB1-PDCCH or the extended SIB 1-PDCCH based on the first indication information, the terminal device may first determine whether the additional SIB1-PDCCH or the extended SIB1-PDCCH is transmitted, to avoid a case in which power consumption of the terminal device is increased when the terminal device blindly detects the additional SIB1-PDCCH or the extended SIB1-PDCCH when the terminal device cannot determine whether the additional SIB1-PDCCH or the extended SIB 1-PDCCH is transmitted. Specifically, this embodiment of this application provides the following several implementations of determining whether the additional SIB 1-PDCCH or the extended SIB 1-PDCCH is transmitted.

In a possible implementation, it is stipulated in a protocol that in some systems or some scenarios, the additional SIB 1-PDCCH or the extended SIB 1-PDCCH is transmitted by default. For example, it may be configured in the protocol that the additional SIB1-PDCCH or the extended SIB1-PDCCH is transmitted by default on some frequencies (for example, some specific frequency bands, such as 6 GHz).

In the foregoing implementation, it is directly stipulated in the protocol that, in some scenarios (for example, farther cell coverage or a larger path loss on a new frequency band), the additional SIB1-PDCCH or the extended SIB1-PDCCH is transmitted by default. For example, the additional SIB1-PDCCH or the extended SIB1-PDCCH being transmitted by default is indicated by using a frequency configuration, so that no additional signaling overhead is generated.

In another possible implementation, in a specific scenario in which the additional SIB1-PDCCH or the extended SIB1-PDCCH being transmitted by default is not stipulated in a protocol, the terminal device may first determine whether the additional SIB 1-PDCCH or the extended SIB 1-PDCCH is transmitted.

Optionally, before step 201, step 201a is added: The network device sends second indication information, where the second indication information indicates whether the additional SIB 1-PDCCH or the extended SIB 1-PDCCH is transmitted. Correspondingly, the terminal device may directly receive the second indication information from the network device or obtain the second indication information from another terminal device. This is not limited in this application.

In a possible implementation, a PBCH carries the second indication information. For example, the last reserved bit or a spare bit on the PBCH carries the second indication information. For example, whether the additional SIB1-PDCCH or the extended SIB1-PDCCH is transmitted is indicated based on a value 0 or 1 of the last bit. 0 indicates that the additional SIB1-PDCCH or the extended SIB1-PDCCH is not transmitted, and 1 indicates that the additional SIB1-PDCCH or the extended SIB1-PDCCH is transmitted. Alternatively, 0 indicates that the additional SIB1-PDCCH or the extended SIB1-PDCCH is transmitted, and 1 indicates that the additional SIB1-PDCCH or the extended SIB1-PDCCH is not transmitted.

In another possible implementation, the first SIB1-PDCCH carries the second indication information, and the second indication information specifically indicates whether the additional SIB1-PDCCH corresponding to the first SIB1-PDCCH is transmitted; whether additional SIB1-PDCCHs corresponding to all SSBs are transmitted; or whether the additional SIB 1-PDCCH is to be transmitted in a preset time unit. All SSBs may be SSBs corresponding to a current periodicity, a specified periodicity, or all periodicities. The preset time unit is time domain information, for example, may be a frame, a subframe, a slot, a mini-slot, or a symbol.

In another possible implementation, the terminal device receives a specific signal sent by the network device, where the specific signal indicates whether the additional SIB1-PDCCH or the extended SIB1-PDCCH is to be transmitted. If the terminal device receives the specific signal, the terminal device considers that the additional SIB1-PDCCH or the extended SIB1-PDCCH is to be transmitted. For example, the specific signal may be a specific SSB signal, and the specific SSB signal may have one or more of the following features: a primary synchronization signal (Primary Synchronization Signal, PSS) of a specific sequence, a secondary synchronization signal (Secondary Synchronization Signal, SSS) of the specific sequence, a PBCH demodulation reference signal (Demodulation Reference Signal, DMRS) of the specific sequence, a special SSB structure, a special SSB time-frequency position, a synchronization signal SS of a specific frequency offset, or a PBCH of the specific frequency offset.

It may be considered that the PSS of the specific sequence is different from a PSS sequence in an SSB signal corresponding to the first SIB1-PDCCH, the SSS of the specific sequence is different from an SSS sequence in the SSB signal corresponding to the first SIB1-PDCCH, and the specific PBCH DMRS is different from a PBCH DMRS sequence in the SSB signal corresponding to the first SIB1-PDCCH. For example, the foregoing specific sequence may be generated in a manner stipulated in a protocol, for example, by using a cyclic shift. The special SSB structure: For example, the SSB disables the PSS and does not send the PSS, and only the SSS and/or the PBCH are sent. The special SSB time-frequency position: For example, the SSB time-frequency position is different from an existing time-frequency position of an SSB corresponding to the first SIB1-PDCCH. The SS/PBCH of the specific frequency offset: For example, an SSB obtained by performing specific frequency offset on the SS and/or the PBCH is not located in a synchronization raster or is not at a synchronization raster position specified in a protocol. The terminal device may consider that, when the SS/PBCH of the specific frequency offset is detected, the additional SIB1-PDCCH or the extended SIB1-PDCCH is to be transmitted.

In the foregoing implementation, the terminal device determines, by obtaining the second indication information, whether the additional SIB1-PDCCH or the extended SIB1-PDCCH is transmitted. In this indication manner, dynamic indication of the additional SIB1-PDCCH or the extended SIB1-PDCCH can be implemented, so that power consumption of the terminal device is reduced, and detection efficiency is improved.

After determining that the additional SIB1-PDCCH or the extended SIB1-PDCCH is transmitted, the terminal device may further determine the time-frequency resource position of the first SIB1-PDCCH and the time-frequency resource position of the additional SIB1-PDCCH or the time-frequency resource position of the extended SIB1-PDCCH based on the first indication information. Specifically, the following several implementations may be included.

In a possible implementation, the first indication information includes one or more offsets, and the offset indicates an offset of the time-frequency resource position of the additional SIB1-PDCCH relative to the time-frequency resource position of the first SIB 1-PDCCH; or the offset indicates an offset of the time-frequency resource position of the additional SIB1-PDCCH relative to a time-frequency resource position of a synchronization signal block SSB. The terminal device obtains one or more time-frequency resource positions of the additional SIB 1-PDCCH based on the one or more offsets.

In the foregoing implementation, the time-frequency resource position of the additional SIB1-PDCCH is related to the time-frequency resource position of the first SIB1-PDCCH. Any one of the one or more offsets includes at least one of a time domain offset value and a frequency domain offset value. To be specific, relative to the time-frequency resource position of the first SIB1-PDCCH, the time-frequency resource position of the additional SIB1-PDCCH may have an offset only on a time domain resource, may have an offset only on a frequency domain resource, or may have an offset on both a time domain resource and a frequency domain resource. Specific offset magnitude is indicated by using an offset.

For example, one or more fixed offsets may be directly stipulated in a protocol, and each offset indicates specific offset magnitude. For example but not limited to, an offset in frequency domain is X RBs or X subcarriers, and an offset in time domain is Y symbols (symbols) or Y slots (slots). Optionally, each offset indicates an offset value of the additional SIB1-PDCCH relative to a maximum index or a minimum index corresponding to the first SIB1-PDCCH on a time domain resource and/or a frequency domain resource. For example, a frequency domain offset may be an offset value of the additional SIB1-PDCCH relative to a minimum RB index of a frequency domain resource occupied by the first SIB 1-PDCCH or an offset value of the additional SIB 1-PDCCH relative to a maximum RB index of the frequency domain resource occupied by the first SIB 1-PDCCH. A time domain offset may be an offset value of the additional SIB1-PDCCH relative to the 1st symbol or the last symbol of a time domain resource occupied by the first SIB1-PDCCH.

It should be noted that the foregoing offset manner is merely an example for description. Specifically, not only the offset values relative to the minimum index and the maximum index, but a plurality of offset manners may be specified in the protocol. This is not limited in this application.

In another possible implementation, the one or more offsets are associated with indication information of the time-frequency resource position of the first SIB1-PDCCH. Control resource set (control resource set) configuration information and search space (search space) configuration information indicate the time-frequency resource position of the first SIB1-PDCCH. Further, the one or more offsets may be an offset value of the indication information of the time-frequency resource position of the first SIB 1-PDCCH. For example, a frequency domain offset included in the offsets may be an additional offset of X RBs based on RB offset value information indicated in the control resource set configuration information, and a time domain offset may be an additional offset of Y symbols based on the 1st symbol index indicated in the search space configuration information.

In addition, when the first indication information includes a plurality of offsets, the terminal device may assume that the additional SIB 1-PDCCH is transmitted at only one time-frequency resource position in a plurality of time-frequency resource positions that correspond to the plurality of offsets and that are of the additional SIB1-PDCCH. The terminal device may obtain one available additional SIB1-PDCCH at the plurality of time-frequency resource positions of the additional SIB 1-PDCCH, and the plurality of offsets may ensure that there is another optional time-frequency resource position after a time-frequency resource position that corresponds to an offset and that is of the additional SIB1-PDCCH is occupied, to improve coverage of the SIB1-PDCCH.

In another possible implementation, the network device sends the specific signal, for example, the specific SSB signal. Correspondingly, the terminal device receives the specific signal, where the specific signal carries or indicates time-frequency resource position information of the additional SIB 1-PDCCH and the first SIB 1-PDCCH. Optionally, a manner of indicating the time domain resource position of the first SIB1-PDCCH and the additional SIB 1-PDCCH in the specific signal may be the same as an indication manner of the first SIB 1-PDCCH in the protocol 38.213, for example, indicating by using an index in the control resource set configuration information and the search space configuration information.

It should be noted that the terminal device determines the time-frequency resource position of the additional SIB1-PDCCH based on the one or more offsets. If the time-frequency resource position of the additional SIB1-PDCCH overlaps one of the time-frequency resource position of the first SIB1-PDCCH, the time-frequency resource position of the SSB, a time-frequency resource position of a system information block 1 physical downlink data channel SIB1-PDSCH, and a time-frequency resource position of a system information block 1 SIB1 physical downlink data channel demodulation reference signal SIB1-PDSCH DMRS, the terminal device assumes that the additional SIB1-PDCCH is not transmitted at the time-frequency resource position of the additional SIB1-PDCCH, which may alternatively be understood as that the terminal device does not detect the additional SIB 1-PDCCH at the time-frequency resource position of the additional SIB1-PDCCH, and the terminal device discards time-frequency resource position information of the additional SIB1-PDCCH. It should be noted that, when the time-frequency resource position of the additional SIB1-PDCCH conflicts with one of the foregoing resource positions, the terminal device needs to assume that the additional SIB 1-PDCCH is not transmitted. The time-frequency resource position of the additional SIB 1-PDCCH may alternatively conflict with a plurality of the foregoing resource positions.

In the foregoing embodiment, the time-frequency position of the additional SIB1-PDCCH is indicated by using the one or more offsets. An implementation is simple, and signaling overheads are low.

In a possible implementation, the offset may be preconfigured on the terminal device. In other words, the offset is directly specified in a protocol, and the terminal device does not need to obtain the offset from the network device or another device. In other words, the offset does not need to be indicated by the first indication information, and the terminal device may determine the time-frequency resource position of the additional SIB 1-PDCCH based on the locally stored offset and the time-frequency resource position of the first SIB1-PDCCH.

In another possible implementation, the first indication information directly carries or explicitly indicates the one or more offsets. The terminal device receives the first indication information sent by the network device, and determines the time-frequency resource position of the additional SIB 1-PDCCH based on the offset carried in the first indication information.

In still another possible implementation, the first indication information indirectly carries or implicitly indicates the one or more offsets. For example, sub-configuration information of first configuration information is determined based on the first indication information, where the sub-configuration information includes the one or more offsets. The first configuration information includes a plurality of pieces of sub-configuration information. The first configuration information may be predefined or preconfigured, and the terminal device and the network device store the first configuration information.

Specifically, the first configuration information may be implemented in two manners.

In a possible implementation, the first configuration information includes the time-frequency resource position information of the first SIB 1-PDCCH and the time-frequency resource position information of the additional SIB1-PDCCH. In other words, the time-frequency resource position information of the first SIB1-PDCCH and the time-frequency resource position information of the additional SIB1-PDCCH are uniformly configured in the first configuration information. The first configuration information may include one or more of the following information: a time-frequency position offset relationship between the additional SIB1-PDCCH and the first SIB1-PDCCH, a difference between scheduling information carried by the additional SIB 1-PDCCH and the first SIB 1-PDCCH, a time-frequency resource allocation manner of at least one of the first SIB1-PDCCH and the additional SIB1-PDCCH, a code rate of at least one of the first SIB1-PDCCH and the additional SIB1-PDCCH, a search space periodicity of at least one of the first SIB1-PDCCH and the additional SIB1-PDCCH, and a quantity of search space of at least one of the first SIB1-PDCCH and the additional SIB1-PDCCH per slot.

In another possible implementation, the first configuration information includes time-frequency resource position information of the extended SIB1-PDCCH. Specifically, the first configuration information includes one or more of the following information: scheduling information carried on the extended SIB 1-PDCCH, a time-frequency resource allocation manner, a code rate, a search space periodicity, and a quantity of search space per slot. It should be understood that the time-frequency resource position information of the first SIB1-PDCCH is included in other configuration information. The other configuration information herein is configuration information other than the first configuration information, and may also be considered as second configuration information. In other words, in this implementation, the first configuration information includes only the time-frequency resource position information of the extended SIB 1-PDCCH. In this case, the first SIB 1-PDCCH and the additional SIB1-PDCCH are not distinguished, but the first SIB1-PDCCH and the additional SIB1-PDCCH are used as an overall resource (namely, the extended SIB1-PDCCH) to indicate time-frequency position information. The second configuration information includes the time-frequency resource position information of the first SIB1-PDCCH. When the terminal device determines the time-frequency resource position information of the SIB 1-PDCCH, whether the first configuration information or the second configuration information is specifically used needs to be determined based on a transmission status of the SIB 1-PDCCH. For example, in a scenario in which the extended SIB 1-PDCCH is transmitted by default (for example, a higher frequency band or farther cell coverage) or the terminal device obtains transmission indication information of the extended SIB1-PDCCH, the terminal device needs to determine specific sub-configuration information in the first configuration information based on the first indication information. When the extended SIB1-PDCCH is not transmitted, the terminal device needs to determine specific sub-configuration information in the second configuration information based on the first indication information.

It should be understood that a time-frequency resource distribution pattern of the additional SIB1-PDCCH and the first SIB1-PDCCH may be directly stipulated in a protocol, or a set of time-frequency resource mapping rules of the additional SIB 1-PDCCH and the first SIB 1-PDCCH may be defined in a protocol.

For the foregoing descriptions, the following provides an example of a specific distribution pattern of the additional SIB 1-PDCCH in time domain and frequency domain. It should be noted that, for ease of understanding a distribution condition, the additional SIB1-PDCCH is divided into a part of the additional SIB1-PDCCH and a remaining part of the additional SIB 1-PDCCH other than the part of the additional SIB 1-PDCCH for description. The distribution condition indicates time-frequency resources occupied by the additional SIB 1-PDCCH and the first SIB1-PDCCH, and is not an actual resource mapping process, and does not represent a mapping sequence.

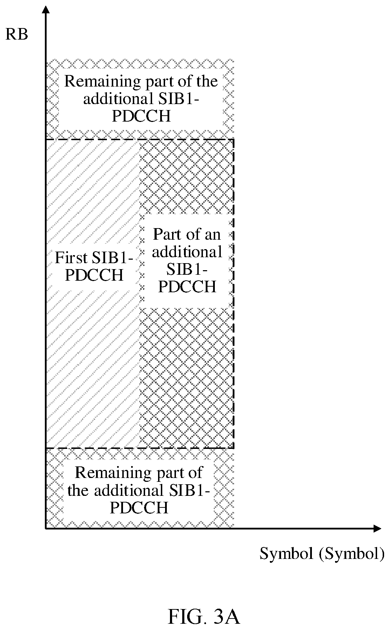

Example 1 of distribution of the first SIB1-PDCCH and the additional SIB1-PDCCH (refer to FIG. 3A to FIG. 3D): The part of the additional SIB1-PDCCH is distributed on a symbol to which the first SIB1-PDCCH is not mapped in symbols whose time domain index numbers are 0, 1, and 2. In other words, the part of the additional SIB 1-PDCCH is distributed on a symbol except a symbol to which the first SIB 1-PDCCH is mapped in the symbols whose time domain index numbers are 0, 1, and 2. A range of RBs occupied by the part of the additional SIB 1-PDCCH in frequency domain is the same as a range of RBs occupied by the first SIB 1-PDCCH. After the part of the additional SIB1-PDCCH is removed from the additional SIB1-PDCCH, the remaining part of the additional SIB1-PDCCH may be distributed on two sides or a same side of frequency domain resources jointly occupied by the part of the additional SIB1-PDCCH and the first SIB1-PDCCH, and symbols occupied by the remaining part of the additional SIB1-PDCCH are the sames as symbols jointly occupied by the part of additional SIB 1 -PDCCH and the first SIB 1-PDCCH.

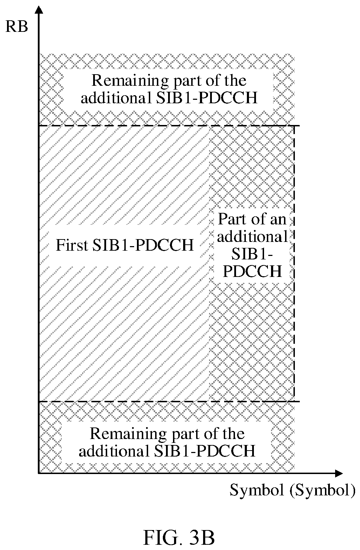

In a possible implementation, as shown in FIG. 3A and FIG. 3B, quantities of RBs that are distributed on the two sides of the frequency domain resources jointly occupied by the part of the additional SIB1-PDCCH and the first SIB 1-PDCCH and that are of the remaining part of the additional SIB 1-PDCCH are the same.

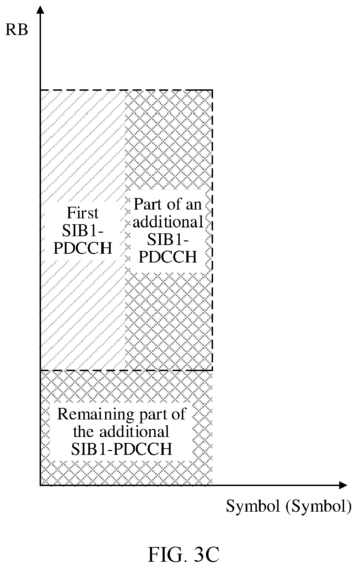

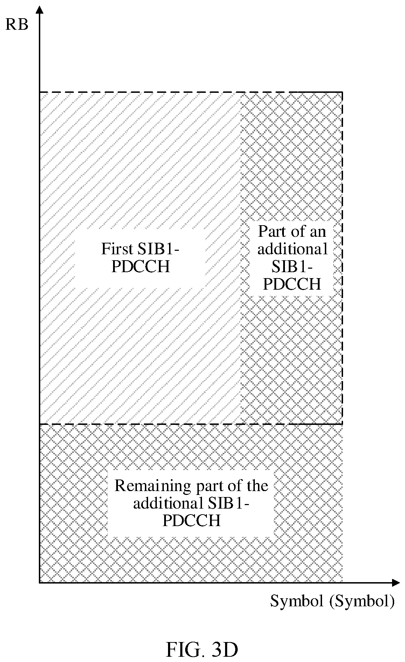

In a possible implementation, for example, as shown in FIG. 3C and FIG. 3D, the remaining part of the additional SIB 1-PDCCH is distributed on a side (which is represented by an index value, and is an RB side represented by a low index value) of a frequency domain resource with a lowest frequency in the frequency domain resources jointly occupied by the part of the additional SIB1-PDCCH and the first SIB1-PDCCH. Alternatively, the remaining part of the additional SIB1-PDCCH is distributed on a side (which is an RB side represented by a high index value) of a frequency domain resource with a highest frequency in the frequency domain resources jointly occupied by the part of the additional SIB1-PDCCH and the first SIB1-PDCCH.

In this embodiment of this application, it is stipulated that X RBs are one frequency domain unit (where for example, six RBs are one frequency domain unit, and six is the same as a quantity of RBs in a control channel unit). The remaining part of the additional SIB 1-PDCCH is distributed, in a unit of one frequency domain unit, on the side (which is the RB side represented by the low index value) of the frequency domain resource with the lowest frequency or the side (which is the RB side represented by the high index value) of the frequency domain resource with the highest frequency in the frequency domain resources jointly occupied by the part of the additional SIB1-PDCCH and the first SIB1-PDCCH.

In a possible implementation, a quantity of RBs included in the additional SIB1-PDCCH may be greater than or equal to a quantity of RBs included in the first SIB1-PDCCH. For example, the first SIB1-PDCCH includes 24 RBs, and the additional SIB1-PDCCH may include 48 RBs. X RBs (for example, X=24) thereof and the first SIB1-PDCCH are time division multiplexed, and the remaining 24 RBs and the first SIB 1-PDCCH are frequency division multiplexed (for example, as shown in FIG. 3A or FIG. 3C). For another example, the first SIB1-PDCCH includes 48 RBs, and the additional SIB1-PDCCH may include 48 RBs. X RBs (for example, X=24) thereof and the first SIB1-PDCCH are time division multiplexed, and the remaining 24 RBs and the first SIB 1-PDCCH are frequency division multiplexed (for example, as shown in 3B or 3D).

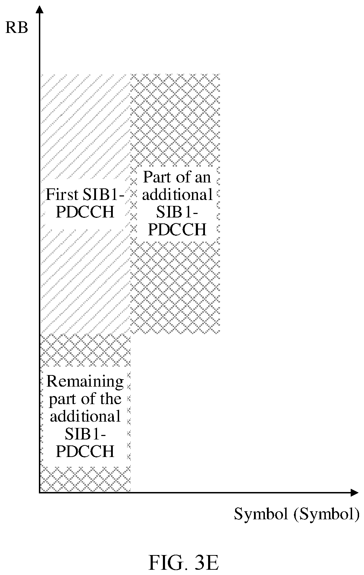

Example 2 of distribution of the first SIB1-PDCCH and the additional SIB1-PDCCH (refer to FIG. 3E to FIG. 3G): The part of the additional SIB1-PDCCH is distributed on a symbol to which the first SIB1-PDCCH is not mapped in symbols whose time domain index numbers are 0, 1, and 2. A start position and an end position of RBs occupied by the part of the additional SIB1-PDCCH are the same as a start position and an end position of RBs occupied by the first SIB1-PDCCH in frequency domain. The remaining part of the additional SIB1-PDCCH other than the part of the additional SIB1-PDCCH in the additional SIB1-PDCCH and the first SIB1-PDCCH may be frequency division multiplexed.

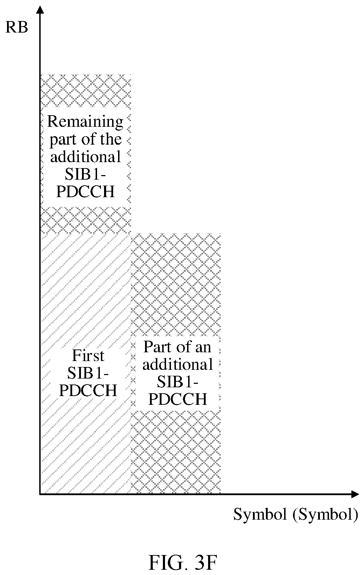

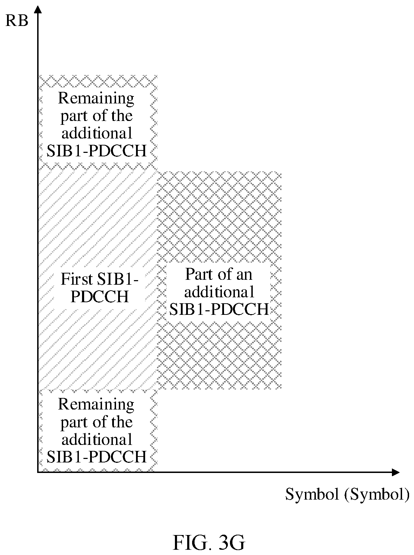

In a possible implementation, for example, as shown in FIG. 3E and FIG. 3F, the remaining part of the additional SIB 1-PDCCH is distributed on a side (which is an RB side represented by a low index value) of a frequency domain resource with a lowest frequency in frequency domain resources occupied by the first SIB 1-PDCCH or a side (which is an RB side represented by a high index value) of a frequency domain resource with a highest frequency in the frequency domain resources occupied by the first SIB1-PDCCH. Alternatively, as shown in FIG. 3 G, the remaining part of the additional SIB1-PDCCH is distributed on two sides of the frequency domain resources occupied by the first SIB1-PDCCH (for example, it may be stipulated that the remaining part of the additional SIB1-PDCCH is preferentially mapped on a high-index RB side or a low-index RB side, and then mapped on the other side). Quantities of RBs on the two sides may be the same or may be different.

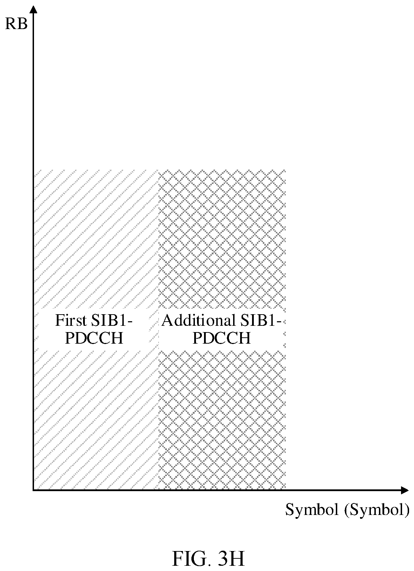

Example 3 of distribution of the first SIB1-PDCCH and the additional SIB1-PDCCH (refer to FIG. 3H): The part of the additional SIB1-PDCCH is distributed on a symbol to which the first SIB1-PDCCH is not mapped in symbols whose time domain index numbers are 0, 1, and 2. A quantity of RBs occupied by the additional SIB 1-PDCCH and a quantity of RBs occupied by the first SIB 1-PDCCH are the same in frequency domain.

Based on the foregoing distribution pattern, optionally, the quantity of RBs occupied by the additional SIB1-PDCCH and the quantity of RBs occupied by the first SIB1-PDCCH are the same in frequency domain, and a start position and an end position of RBs occupied by the additional SIB 1-PDCCH are the same as a start position and an end position of RBs occupied by the first SIB1-PDCCH in frequency domain. For example, as shown in FIG. 3H, it is assumed that the first SIB1-PDCCH occupies 24 RBs in frequency domain and occupies the $0^{th}$ symbol in time domain, and the additional SIB1-PDCCH also occupies 24 RBs in frequency domain and occupies the $1^{st}$ symbol in time domain.

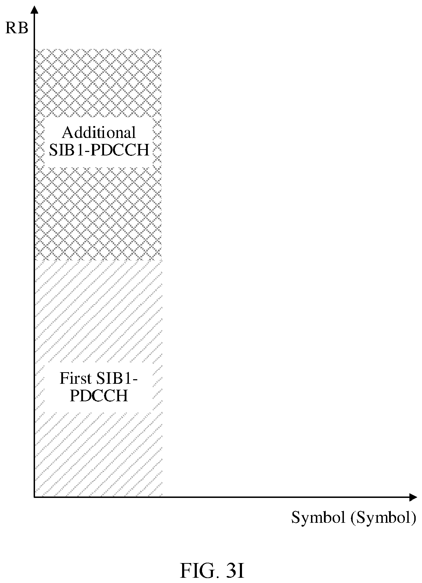

Example 4 of distribution of the first SIB1-PDCCH and the additional SIB1-PDCCH (refer to FIG. 3I): The additional SIB1-PDCCH and the first SIB1-PDCCH are frequency division multiplexed, and the additional SIB1-PDCCH and the first SIB1-PDCCH occupy a same symbol in time domain.

For example, as shown in FIG. 3I, it is assumed that the first SIB 1-PDCCH occupies 24 RBs in frequency domain and occupies the $0^{th}$ symbol in time domain, and the additional SIB1-PDCCH also occupies 24 RBs in frequency domain and occupies the $0^{th}$ symbol in time domain.

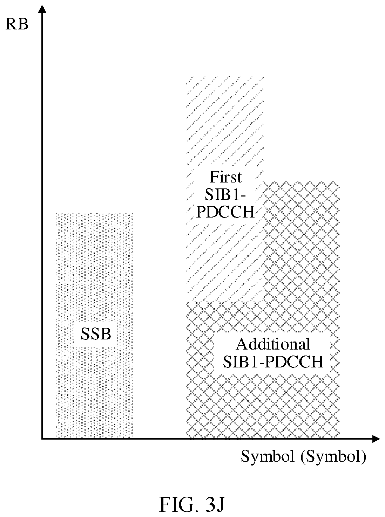

Example 5 of distribution of the first SIB1-PDCCH and the additional SIB1-PDCCH (refer to FIG. 3J): For example, as shown in FIG. 3J, the additional SIB1-PDCCH is distributed on at least one of symbols whose index numbers are 0, 1, and 2 in time domain. A start position of RBs of the additional SIB 1-PDCCH distributed in frequency domain is the same as a start position of RBs of an SSB corresponding to the first SIB1-PDCCH or a start position of RBs of the foregoing described specific SSB.

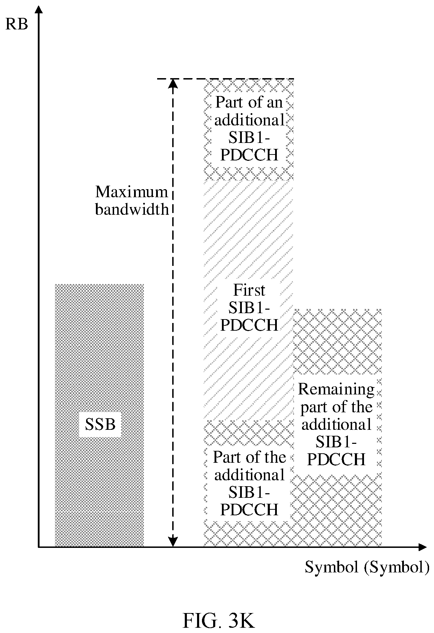

Example 6 of distribution of the first SIB1-PDCCH and the additional SIB1-PDCCH (refer to FIG. 3K):

It may be specified in a protocol that a maximum bandwidth occupied by the SIB 1-PDCCH in frequency domain is N RBs. The additional SIB 1-PDCCH uses a start position of RBs of the first SIB 1-PDCCH, a start position of RBs of an SSB corresponding to the first SIB1-PDCCH, or a start position of RBs of the specific SSB as a start position of RBs in frequency domain, and the additional SIB1-PDCCH and the first SIB1-PDCCH are frequency division multiplexed in an RB range specified in the protocol.

In a possible implementation, the maximum bandwidth N RBs may be a sum of a quantity of RBs of the first SIB1-PDCCH and a quantity of RBs offset by the first SIB1-PDCCH in frequency domain relative to the SSB corresponding to the first SIB1-PDCCH.

For example, as shown in FIG. 3K, the additional SIB1-PDCCH uses the start position of RBs of the SSB corresponding to the first SIB1-PDCCH as the start position of RBs in frequency domain. In an RB range specified in the protocol, the part of the additional SIB1-PDCCH and the first SIB1-PDCCH are frequency division multiplexed, and the remaining part of the additional SIB1-PDCCH and the first SIB1-PDCCH are time division multiplexed.

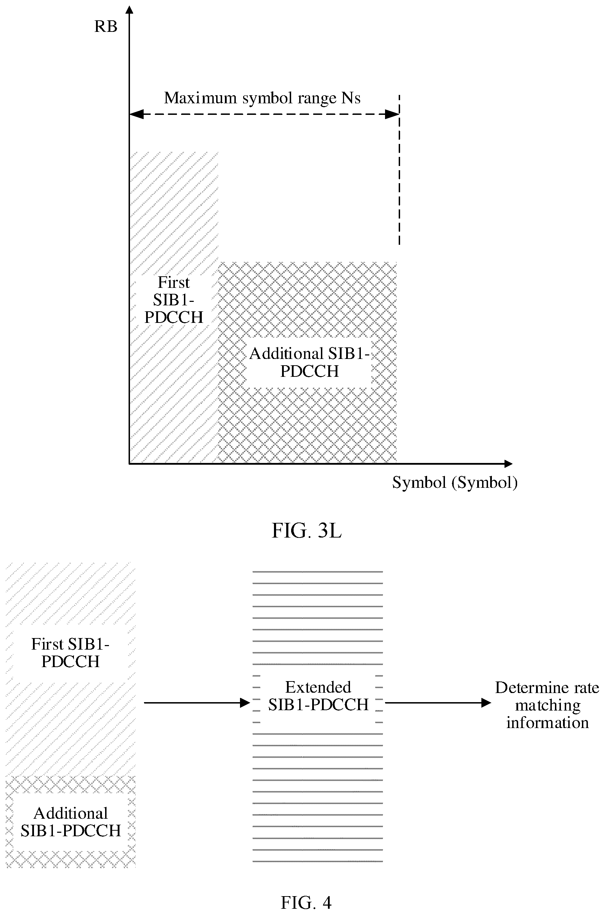

Example 7 of distribution of the first SIB1-PDCCH and the additional SIB1-PDCCH (refer to FIG. 3L):

For example, as shown in FIG. 3L, it is specified in a protocol that a maximum quantity of symbols occupied by the SIB1-PDCCH in time domain is Ns. The additional SIB1-PDCCH uses a start position of RBs corresponding to the first SIB1-PDCCH, a start position of RBs of an SSB corresponding to the first SIB1-PDCCH, or a start position of RBs of the specific SSB as a start position of RBs in frequency domain, and the additional SIB1-PDCCH and the first SIB 1-PDCCH are time division multiplexed in an Ns range specified in the protocol.

It should be noted that when the additional SIB1-PDCCH and the first SIB1-PDCCH are not distinguished, the foregoing several distribution patterns may be correspondingly understood as time-frequency resource distribution patterns of the extended SIB1-PDCCH.

Specifically, in a possible implementation, the terminal device may assume that the network device maps resources of the extended SIB1-PDCCH in a manner of first time domain and then frequency domain. For example, in a determined frequency domain range, the resources of the extended SIB1-PDCCH are sequentially mapped, starting from a minimum RB index n corresponding to a minimum symbol index m, to an RB whose index is n corresponding to a symbol whose index is m+1, until time domain symbol mapping is completed, and then the resources of the extended SIB 1-PDCCH are mapped from an RB whose index is n+1 corresponding to the minimum symbol index m. In another possible implementation, the terminal device may assume that the network device maps the resources of the extended SIB 1-PDCCH in a manner of first frequency domain and then time domain. For example, in a determined time domain range, the resources of the extended SIB1-PDCCH are sequentially mapped, starting from a minimum RB index n corresponding to a minimum symbol index m, to an RB whose index is n+1 corresponding to a symbol whose index is m, until mapping to corresponding RBs in frequency domain is completed, and then the resources of the extended SIB1-PDCCH are mapped from an RB whose index is n corresponding to a symbol index m+1.

It should be noted that the foregoing distribution patterns are merely examples for description, and there may be another distribution pattern in addition to the foregoing examples. This is not limited in this application.

The following describes the first configuration information by using an example, where the first configuration information is implemented in a form of a table.

Specifically, in this embodiment of this application, the first configuration information includes control resource set configuration information and search space configuration information of the SIB1-PDCCH. The control resource set configuration information is for determining a frequency domain position of the SIB1-PDCCH, and the search space configuration information is for determining a time domain position of the SIB 1-PDCCH. Specifically, the control resource set configuration information and the search space configuration information each correspond to one table. Each table includes a plurality of rows of sub-configuration information, and the sub-configuration information in each row is indicated by an index. The index may be the first indication information in this embodiment of this application. In other words, the first indication information is the index of the sub-configuration information in the first configuration information (the control resource set configuration information and the search space configuration information), and indicates a specific piece of sub-configuration information. For example, the first indication information may be carried in a pdcch-ConfigSIB 1 field in an MIB message carried on a PBCH. Specifically, a controlResourceSetZero field (4 bits) in the pdcch-ConfigSIB1 field indicates an index in the control resource set configuration information, and a SearchSpaceZero field (4 bits) indicates an index in the search space configuration information.

It should be noted that, similar to a stipulation in the 3GPP protocol 38.213, the control resource set configuration information and the search space configuration information in the first configuration information in this embodiment of this application may respectively correspond to a plurality of tables. The terminal device first determines a specific table thereof with reference to a bandwidth of the terminal device and a cell subcarrier spacing, and then determines, based on the first indication information, specific corresponding sub-configuration information in the table. The following describes this embodiment of this application with reference to one of the tables. Other tables may be configured based on a same inventive concept. For brevity of the specification, the tables are not listed one by one herein.

Example 1: The first configuration information includes the time-frequency resource position of the first SIB1-PDCCH and the time-frequency resource position of the additional SIB1-PDCCH.

The first configuration information may include information shown in Table 1 and Table 2. Table 1 shows the control resource set configuration information, and Table 2 shows the search space configuration information. Information represented by Table 13-4 in the 3GPP protocol 38.213 is used as an example of time-frequency resource information of the first SIB1-PDCCH in Table 1, and information represented by Table 13-11 in the 3GPP protocol 38.213 is used as an example of time-domain information of the first SIB 1-PDCCH in Table 2. In Table 1, an SS/PBCH and a CORESET multiplexing pattern are consistent with descriptions in the 3GPP protocol 38.213. A quantity of RB s occupied by a CORESET is a quantity of RBs occupied by the first SIB 1-PDCCH, a quantity of symbols occupied by the CORESET is a quantity of symbols occupied by the first SIB 1-PDCCH, an offset 1 is an offset of a minimum RB index of the first SIB 1-PDCCH to a minimum RB index of a common RB overlapping the 1st RB of a corresponding SS/PBCH block, and an offset 2 (namely, $\Delta f$) may be an offset of a minimum RB index of the additional SIB1-PDCCH to the minimum RB index of the common RB overlapping the 1st RB of the corresponding SS/PBCH block, or may be an offset of the minimum RB index of the additional SIB 1-PDCCH to the minimum RB index of the first SIB 1-PDCCH, or may be an offset of a maximum RB index of the additional SIB 1-PDCCH to a maximum RB index of the first SIB 1-PDCCH, or may be an added RB of the additional SIB 1-PDCCH relative to the minimum RB index or the maximum RB index of the first SIB1-PDCCH. This is not specifically limited in this application. In Table 2, content of configuration parameters in the first five columns may be correspondingly understood as information that is indicated in the protocol 38.213 and that is about the first SIB1-PDCCH. An offset shown in the 6th column may be an offset value of the additional SIB1-PDCCH relative to the 1st symbol index or the last symbol index of the first SIB1-PDCCH in time domain, or may be an offset value relative to the 1st symbol index or the last symbol index of an SSB. This is not specifically limited in this application. Optionally, in Table 2, an offset value, for example, one or two slots, of a CORESET detection periodicity of the additional SIB1 PDCCH relative to a CORESET detection periodicity of the first SIB 1-PDCCH may be further added.

Specifically, the time-frequency resource distribution pattern of the additional SIB1-PDCCH and the first SIB1-PDCCH shown in FIG. 3H is used as an example. The quantity of RBs included in the additional SIB1-PDCCH is the same as the quantity of RBs of the first SIB1-PDCCH. An example in which the first indication information indicates sub-configuration information corresponding to an index 0 is used for description. In the time-frequency resource distribution pattern of the additional SIB 1-PDCCH and the first SIB 1-PDCCH shown in FIG. 3H, a value of $\Delta f$ is 0, and a value of $\Delta s$ is 1. It should be noted that the foregoing is merely an example for description. Based on a same concept, different values may be corresponded in a specific resource distribution pattern. This is not limited in this application.

**Table 1**

| Index (Index) | SS/PBCH and CORESET multiplexing pattern (SS/PBCH block and CORESET multiplexing pattern) | Quantity of RBs occupied by a CORESET (Number of RBs $N_{RB}^{CORESET}$) | Quantity of symbols occupied by the CORESET (Number of Symbols $N_{symbol}^{CORESET}$) | Offset (Offset) (RBs) | |
|---|---|---|---|---|---|
| | | | | Offset 1 | Offset 2 |
| 0 | 1 | 24 | 2 | 0 | $\Delta f$ |
| 1 | 1 | 24 | 2 | 2 | $\Delta f$ |
| 2 | 1 | 24 | 2 | 4 | $\Delta f$ |
| ... | ... | ... | ... | ... | ... |

**Table 2**

| Index (Index) | O | Quantity of search space sets per slot (Number of search space sets per slot) | M | Index of the 1st symbol (First symbol index) | Offset Offset (symbols) |
|---|---|---|---|---|---|
| 0 | 0 | 1 | 1 | 0 | $\Delta s$ |
| 1 | 0 | 2 | 1/2 | {0, if $i$ is even}, { $N_{RB}^{CORESET}$, if $i$ is odd} | $\Delta s$ |
| 2 | 2 | 1 | 1 | 0 | $\Delta s$ |

(continued)

| Index (Index) | O | Quantity of search space sets per slot (Number of search space sets per slot) | M | Index of the 1st symbol (First symbol index) | Offset Offset (symbols) |
|---|---|---|---|---|---|
| ... | ... | ... | ... | ... | ... |

Example 2: The first configuration information includes the time-frequency resource position of the extended SIB1-PDCCH.

A quantity of symbols occupied at the time-frequency resource position of the extended SIB1-PDCCH in time domain is greater than a quantity of symbols occupied by the first SIB 1-PDCCH in time domain, and a quantity of resource blocks RBs occupied in frequency domain is greater than or equal to a quantity of RBs occupied by the first SIB1-PDCCH in frequency domain. Alternatively, a quantity of RBs occupied at the time-frequency resource position of the extended SIB1-PDCCH in frequency domain is greater than a quantity of RBs occupied by the first SIB1-PDCCH in frequency domain, and a quantity of symbols occupied in time domain is greater than or equal to a quantity of symbols occupied by the first SIB 1-PDCCH in time domain.

Further, a time domain resource occupied by the extended SIB1-PDCCH may be at least one of symbols whose index numbers are 0 to 2.

Specifically, the first configuration information may include, for example, information shown in Table 3 and Table 4. Table 3 shows control resource set configuration information of the extended SIB1-PDCCH, and Table 4 shows search space configuration information of the extended SIB1-PDCCH. f shown in Table 3 is the quantity of RBs occupied by the extended SIB 1-PDCCH in frequency domain, and s' is the quantity of symbols occupied by the extended SIB1-PDCCH in time domain. A value of s' may be one of 1, 2, and 3. $\Delta f'$ is an offset of the extended SIB1-PDCCH to a minimum RB index of a common RB overlapping the 1st RB of a corresponding SS/PBCH block in frequency domain. Table 4 includes information such as search space corresponding to the extended SIB 1-PDCCH, a quantity of search space per slot, and a start symbol index. Specific configuration parameter information may be the same as configuration parameter information of the first SIB1-PDCCH in the protocol 38.213 (where Table 13-11 in the protocol 38.213 is used as an example), or a set of new search space configuration information may be redefined.

For example, a resource distribution pattern of the extended SIB1-PDCCH shown in FIG. 3H is used as an example. It is assumed that, in the distribution pattern, the quantity of RBs of the extended SIB1-PDCCH in frequency domain is 24, and the quantity of symbols in time domain is 2. It is assumed that the first indication information indicates an index 0. In this case, a value of f corresponding to the index 0 is 24, and a value of s' is 2. For a value of $\Delta f'$, refer to a frequency domain offset value of the first SIB1-PDCCH in the protocol 38.213. For example, the value of $\Delta f'$ may be 0. It should be noted that the foregoing is merely an example for description. Based on a same concept, different values may be corresponded in a specific resource distribution pattern. This is not limited in this application.

**Table 3**

| Index (Index) | Synchronization signal block and control resource set multiplexing pattern (SS/PBCH block and CORESET multiplexing pattern) | Quantity of RBs occupied by the extended SIB1-PDCCH (Number of RBs $N_{RB}^{CORESET}$ ) | Quantity of symbols occupied by the extended SIB1-PDCCH (Number of Symbols $N_{symbol}^{CORESET}$ ) | Offset value (RBs) Offset (RBs) |
|---|---|---|---|---|
| 0 | 1 | f | s' | $\Delta f'$ |
| 1 | 1 | f | s' | $\Delta f'$ |
| 2 | 1 | f | s' | $\Delta f'$ |
| ... | ... | ... | ... | .... |

**Table 4**

| Index (Index) | O | Quantity of search space sets per slot (Number of search space sets per slot) | M | Index of the 1st symbol (First symbol index) |
|---|---|---|---|---|
| 0 | 0 | 1 | 1 | 0 |

(continued)

| Index (Index) | O | Quantity of search space sets per slot (Number of search space sets per slot) | M | Index of the 1st symbol (First symbol index) |
|---|---|---|---|---|
| 1 | 0 | 2 | 1/2 | {0, if $i$ is even}, { $N_{RB}^{CORESET}$ , if $i$ is odd} |
| 2 | 2 | 1 | 1 | 0 |
| … | … | … | … | … |

In the foregoing examples, the first configuration information is presented in a form of a table. It should be noted that the first configuration information may alternatively be implemented by using a formula or in another manner. This is not specifically limited in this application.

Optionally, the physical downlink control channel transmission method further includes the following steps.

S203: The terminal device detects the first SIB 1-PDCCH and the additional SIB 1-PDCCH based on the first indication information.

In a possible implementation, after the terminal device obtains an indication indicating that the additional SIB1-PDCCH or the extended SIB1-PDCCH is to be transmitted, the terminal device assumes that it is determined that downlink control information (downlink control information, DCI) corresponding to the additional SIB1-PDCCH or the extended SIB1-PDCCH on different detection opportunities is to be sent. In other words, after sending the additional SIB1-PDCCH or the extended SIB1-PDCCH, the network device determines to send the DCI. In an implementation, after the terminal device receives the indication indicating that the additional SIB1-PDCCH is to be transmitted, the terminal device may consider or assume that DCI corresponding to the first SIB1-PDCCH is to be sent. In other words, the network device sends the additional SIB1-PDCCH, and also determines to send the DCI corresponding to the first SIB1-PDCCH. For example, the foregoing implementation may be implemented by using stipulation in a protocol. Further, after obtaining the time-frequency resource position information of the additional SIB 1-PDCCH or the extended SIB 1-PDCCH, the terminal device detects the additional SIB 1-PDCCH or the extended SIB1-PDCCH at the corresponding time-frequency resource position. In a possible implementation, a detection periodicity of the additional SIB 1-PDCCH or the extended SIB 1-PDCCH is the same as a detection periodicity of the first SIB1-PDCCH. Alternatively, it may be considered that a sending periodicity of the additional SIB1-PDCCH or the extended SIB 1-PDCCH is the same as a sending periodicity of the first SIB 1-PDCCH.

In another possible implementation, the detection periodicity of the additional SIB1-PDCCH or the extended SIB1-PDCCH is directly stipulated in a protocol. Alternatively, third indication information is carried on a PBCH or the first SIB1-PDCCH, where the third indication information indicates the detection periodicity of the additional SIB 1-PDCCH or the extended SIB 1-PDCCH. For example, the detection periodicity of the additional SIB1-PDCCH or the extended SIB1-PDCCH is 20 ms*k, where k may be an integer greater than 1 (for example, 2, 4, 8, 16, 32, or 64), or may be a number greater than 0 and less than 1 (for example, 1/2, 1/4, 1/8, 1/10, 1/20, or 1/40).

The terminal device detects the additional SIB1-PDCCH or the extended SIB1-PDCCH based on the detection periodicity of the additional SIB1-PDCCH or the extended SIB1-PDCCH.

In addition, it should be noted that, when the additional SIB 1-PDCCH or the extended SIB 1-PDCCH is transmitted by default, in a possible implementation, the terminal device assumes that a function of the additional SIB1-PDCCH or the extended SIB1-PDCCH is enabled. To be specific, the network device may transmit the additional SIB1-PDCCH or the extended SIB1-PDCCH, but whether the network device sends the additional SIB1-PDCCH or the extended SIB1-PDCCH at each detection occasion is determined by the network device. In this case, the terminal device detects the additional SIB 1-PDCCH or the extended SIB 1-PDCCH at different detection occasions. If the detection fails, the terminal device may consider that the network device does not send the additional SIB1-PDCCH or the extended SIB 1-PDCCH. In another possible implementation, the terminal device needs to assume that the function of the additional SIB1-PDCCH or the extended SIB1-PDCCH is enabled, and the additional SIB1-PDCCH or the extended SIB1-PDCCH is always transmitted in each detection periodicity. In this case, the terminal device should detect the additional SIB1-PDCCH or the extended SIB1-PDCCH at each detection occasion. If the detection fails, the terminal device assumes that the network device sends the additional SIB 1-PDCCH or the extended SIB1-PDCCH, but the detection fails. For example, the terminal device may jointly demodulate the additional SIB1-PDCCH detected in a current periodicity and the first PDCCH.

S204: The terminal device obtains the system information block 1 SIB1 based on the detected first SIB1-PDCCH and the additional SIB1-PDCCH.

In a possible implementation, the scheduling information carried on the additional SIB1-PDCCH may be independently demodulated. The terminal device may consider or assume that the additional SIB 1-PDCCH and the first SIB1-PDCCH carry corresponding scheduling information. For example, the corresponding scheduling information may specifically include but is not limited to the following information: a same SIB 1-PDSCH frequency domain resource (Frequency domain resource assignment), a same SIB1-PDSCH time domain resource (Time domain resource assignment), a same SIB1-PDSCH code rate and modulation order (Modulation and coding scheme), and a same SIB1-PDSCH redundancy version (Redundancy version). Optionally, an SIB1-PDSCH redundancy version scheduled by the first SIB 1-PDCCH may be different from that scheduled by the additional SIB 1-PDCCH.

Optionally, the terminal device may assume that a DMRS sequence of the additional SIB1-PDCCH is the same as a DMRS sequence of the first SIB 1-PDCCH. On one hand, the terminal device does not need to generate a new DMRS sequence. On the other hand, the same DMRS sequence helps joint detection performed on the additional SIB1-PDCCH and the first SIB1-PDCCH, so that complexity is reduced.

Optionally, the terminal device may verify the first SIB 1-PDCCH by using a radio network temporary identifier (System Information-Radio Network Temporary Identifier, SI-RNTI) of the first system information, or the terminal device may verify the additional SIB 1-PDCCH by using a second SI-RNTI. The first SI-RNTI is an existing SI-RNTI, and the second SI-RNTI is a newly defined SI-RNTI. The newly defined SI-RNTI is generated based on a cell identifier, and may be for only verifying the additional SIB 1-PDCCH.

Optionally, the terminal device may assume that the additional SIB 1-PDCCH and the first SIB1-PDCCH are for scheduling same PDSCH information. If the terminal device successfully demodulates the first SIB1-PDCCH, the terminal device does not need to detect the additional SIB1-PDCCH. Alternatively, if the terminal device successfully demodulates the additional SIB1-PDCCH, the terminal device does not need to detect the first SIB1-PDCCH.

It should be noted that, when the terminal device determines that the additional SIB1-PDCCH is to be transmitted, the terminal device assumes a start position, in time domain, of a DMRS of a PDSCH scheduled by using the additional SIB1-PDCCH and the first SIB1-PDCCH is a symbol whose index is 3.

Optionally, the terminal device assumes that the additional SIB1-PDCCH and the first SIB1-PDCCH use same precoding. This helps joint demodulation performed on the additional SIB1-PDCCH and the first SIB1-PDCCH.

In the foregoing embodiment, the additional SIB1-PDCCH and the first SIB1-PDCCH carry the corresponding scheduling information, and the terminal device may jointly demodulate the additional SIB1-PDCCH and the first SIB1-PDCCH, to further improve the coverage of the SIB1-PDCCH, and avoid a case in which the terminal device cannot access a network due to insufficient coverage of the SIB1-PDCCH.

In another possible implementation, the additional SIB1-PDCCH is only used as a supplementary resource of the first SIB 1-PDCCH, cannot be independently demodulated, and is for implementing resource expansion for the first SIB1-PDCCH. The first SIB1-PDCCH and the additional SIB1-PDCCH jointly form the extended SIB1-PDCCH. The extended SIB 1-PDCCH carries the scheduling information originally carried on the first SIB 1-PDCCH. Optionally, a DMRS sequence of the additional SIB1-PDCCH is the same as that of the first SIB1-PDCCH. For example, as shown in FIG. 4, the terminal device may perform rate matching based on the extended SIB1-PDCCH. In other words, the terminal device determines a code rate of the extended SIB1-PDCCH based on bit information carried on the extended SIB 1-PDCCH, the extended SIB 1-PDCCH, and a pilot resource of the extended SIB 1-PDCCH.

In the foregoing implementation, the additional SIB1-PDCCH is used as a resource expansion of the first SIB 1-PDCCH, and may be used together with the first SIB 1-PDCCH as a whole resource to carry the scheduling information originally carried by the first SIB1-PDCCH, so that a quantity of required extended resources is more flexible. In a scenario in which the first SIB 1-PDCCH does not need to be completely expanded, resource overheads are less, and robustness of the SIB 1-PDCCH can be improved.

Further, for a system in which the network device performs transmission by using a beam or the terminal device needs to select a beam for receiving, the terminal device may assume that the additional SIB 1-PDCCH and the first SIB1-PDCCH have a quasi co-located (Quasi Co-Located, QCL) relationship or there is a quasi co-located relationship between the additional SIB 1-PDCCH and the first SIB 1-PDCCH, that is, the terminal device may receive the additional SIB 1-PDCCH by using a receive beam for receiving the first SIB 1-PDCCH. Alternatively, the terminal device may assume that the additional SIB1-PDCCH and the SSB corresponding to the first SIB1-PDCCH have a quasi co-located relationship or there is a quasi co-located relationship between the additional SIB1-PDCCH and the SSB corresponding to the first SIB1-PDCCH, that is, the terminal device may receive the additional SIB1-PDCCH by using a receive beam for receiving the SSB corresponding to the first SIB1-PDCCH. Alternatively, the terminal device may assume that the additional SIB1-PDCCH and the specific SSB indicating the additional SIB1-PDCCH have a quasi co-located relationship or there is a quasi co-located relationship between the additional SIB1-PDCCH and the specific SSB indicating the additional SIB1-PDCCH, that is, the terminal device may receive the additional SIB1-PDCCH by using a receive beam for receiving the specific SSB.

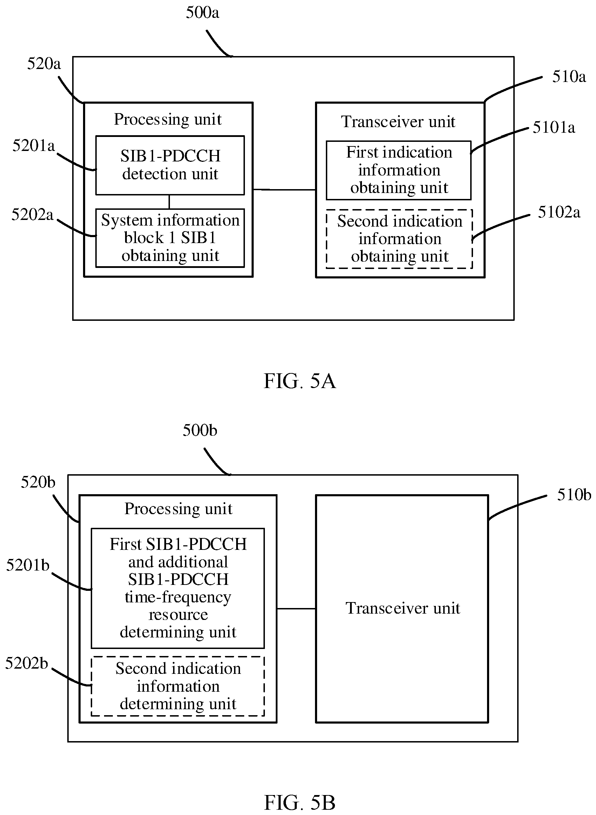

As shown in FIG. 5A, an embodiment of this application further provides an apparatus 500a. The apparatus 500a may be a terminal device, an apparatus in the terminal device, or an apparatus that can be collaboratively used with the terminal device. In a possible implementation, the apparatus 500a may include modules or units that one-to-one correspond to the methods/operations/steps/actions performed by the terminal device in the foregoing method embodiments. The units may be hardware circuits or software, or may be implemented by a hardware circuit in combination with software. In a possible implementation, the apparatus 500a may include a transceiver unit 510a and a processing unit 520a. The transceiver unit 510a may communicate with the outside, and the processing unit 520a is configured to process data. The transceiver unit 510a may also be referred to as a communication interface or a communication unit.

When the apparatus 500a is configured to perform the operations performed by the terminal device, the transceiver unit 510a may include a first indication information obtaining unit 5101a. The first indication information obtaining unit 5101a may be configured to obtain first indication information, where the first indication information indicates a time-frequency resource position of a first SIB 1-PDCCH and an additional SIB 1-PDCCH. Optionally, the transceiver unit 510a may further include a second indication information obtaining unit 5102a. The second indication information obtaining unit 5102a may be configured to, for example, obtain second indication information, where the second indication information indicates whether the additional SIB1-PDCCH is transmitted. Further, the processing unit 520a may perform processing based on the first indication information or the second indication information obtained by the transceiver unit 510a. For example, the processing unit 520a may include a SIB1-PDCCH detection unit 5201a. The SIB1-PDCCH detection unit 5201a is configured to detect the first SIB1-PDCCH and the additional SIB1-PDCCH based on the first indication information. The processing unit 520a further includes a system information block 1 SIB1 obtaining unit 5202a. The SIB1 obtaining unit 5202a is configured to obtain a system information block 1 SIB1 based on the detected first SIB1-PDCCH and the additional SIB1-PDCCH.

It should be noted that, in a specific embodiment of this application, the apparatus 500a may be the terminal device in the foregoing method embodiment. In other words, during specific implementation, for function implementation and beneficial effects of each module of the apparatus 500a, refer to descriptions of related method steps in the foregoing method embodiments. For brevity of the specification, details are not described herein again.

In addition, functional unit division in the apparatus 500a is merely an example for description. The processing unit 520a and the transceiver unit 510a may further include other functional units to implement corresponding functions. Alternatively, the processing unit 520a and the transceiver unit 510a may implement functions without specific functional unit division. This is not specifically limited in this application.

As shown in FIG. 5B, an embodiment of this application further provides an apparatus 500b. The apparatus 500b may be a network device, an apparatus in the network device, or an apparatus that can be collaboratively used with the network device. In a possible implementation, the apparatus 500b may include modules or units that one-to-one correspond to the methods/operations/steps/actions performed by the network device in the foregoing method embodiments. The units may be hardware circuits or software, or may be implemented by a hardware circuit in combination with software. In a possible implementation, the apparatus 500b may include a transceiver unit 5 10b and a processing unit 520b. The transceiver unit 510b may communicate with the outside, and the processing unit 520b is configured to process data. The transceiver unit 510b may also be referred to as a communication interface or a communication unit.

When the apparatus 500b is configured to perform the operations performed by the network device, the processing unit 520b may include a determining unit 5201b. The determining unit 5201b may be, for example, configured to determine a time-frequency resource position of a first SIB 1-PDCCH and an additional SIB 1-PDCCH. Optionally, the processing unit 520b may include a second indication information determining unit 5202b. The second indication information determining unit 5202b may be configured to, for example, determine second indication information, where the second indication information indicates whether the additional SIB1-PDCCH is transmitted. The transceiver unit 510b may be configured to perform step 202 shown in FIG. 2 to send first indication information, where the first indication information indicates the time-frequency resource position of the first SIB1-PDCCH and the additional SIB1-PDCCH; or perform step 201a to send the second indication information.

It should be noted that, in a specific embodiment of this application, the apparatus 500b may be the terminal device in the foregoing method embodiment. In other words, during specific implementation, for function implementation and beneficial effects of each module of the apparatus 500b, refer to descriptions of related method steps in the foregoing method embodiments. For brevity of the specification, details are not described herein again.

In addition, functional unit division in the apparatus 500b is merely an example for description. The processing unit 520b and the transceiver unit 510b may further include other functional units to implement corresponding functions. Alternatively, the processing unit 520b and the transceiver unit 510b may implement functions without specific functional unit division. This is not specifically limited in this application.

In a network device deployed in a distributed manner, the transceiver unit 510b may not include a radio frequency unit or an antenna.

It should be understood that FIG. 5A and FIG. 5B are merely examples rather than limitations. The terminal device and the network device that include the transceiver unit and the processing unit may not depend on structures shown in FIG. 5A and FIG. 5B. Names of the transceiver unit and the processing unit are merely examples, and are not limited. All units or modules that can implement functions of the transceiver unit and the processing unit in the examples may be correspondingly understood as the transceiver unit and the processing unit.

When the apparatus 500a and the apparatus 500b each are a chip or an integrated circuit system, the chip or the integrated circuit system includes a transceiver unit and a processing unit. The transceiver unit may be an input/output circuit or a communication interface. The processing unit may be a processor, a microprocessor, or an integrated circuit that is integrated on the chip. Unless otherwise specified, operations such as transmission, sending, and receiving related to the transceiver unit may be more generally understood as operations such as output, receiving, and input of the transceiver unit if the operations do not conflict with actual functions or internal logic of the operations in related descriptions.

In this embodiment, the apparatus 500a and the apparatus 500b may be presented in a form in which the functional units are obtained through division in an integrated manner. The "unit" herein may be an ASIC, a circuit, a processor that executes one or more software or firmware programs, a memory, an integrated logic circuit, and/or another component capable of providing the foregoing functions.

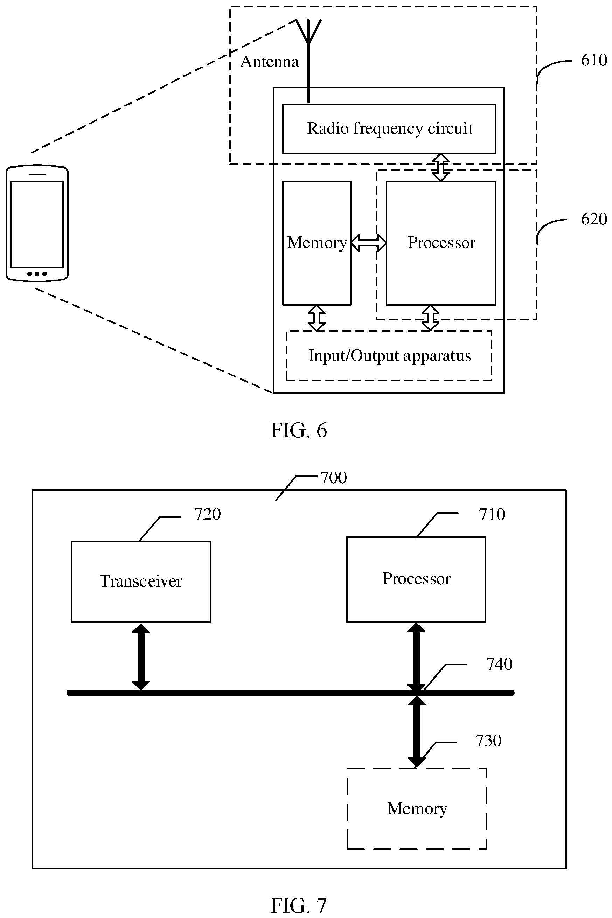

FIG. 6 is a schematic diagram of a structure of a simplified terminal device 600. For ease of understanding and illustration, in FIG. 6, the terminal device is, for example, a mobile phone. As shown in FIG. 6, the terminal device includes a processor, a memory, a radio frequency circuit, an antenna, and an input/output apparatus. The processor is mainly configured to: process a communication protocol and communication data, control the terminal device, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user. It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 6 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, an antenna having sending and receiving functions and the radio frequency circuit may be considered as a receiving unit and a sending unit (which may also be collectively referred to as a transceiver unit) of the terminal device, and a processor having a processing function may be considered as a processing unit of the terminal device. As shown in FIG. 6, the terminal device includes a transceiver unit 610 and a processing unit 620. The transceiver unit 610 may alternatively be referred to as a receiver/transmitter (sender), a receiver/transmitter machine, a receiver/transmitter circuit, or the like. The processing unit 620 may also be referred to as a processor, a processing board, a processing module, a processing apparatus, or the like. The transceiver unit 610 and the processing unit 620 may be configured to perform the actions of the terminal device in the foregoing method embodiments. For example, the transceiver unit 610 is configured to obtain first indication information, where the first indication information indicates a time-frequency resource position of a first SIB 1-PDCCH and an additional SIB1-PDCCH; and the processing unit 620 is configured to detect the first SIB1-PDCCH and the additional SIB1-PDCCH based on the first indication information. The processing unit 620 may be further configured to obtain a system information block 1 SIB1 based on the detected first SIB1-PDCCH and the additional SIB1-PDCCH.

All related content and beneficial effects of the steps in the foregoing method embodiments may be referenced to function descriptions of corresponding functional components, and details are not described herein again.

As shown in FIG. 7, an embodiment of this application further provides an apparatus 700. The apparatus 700 is configured to implement the functions of the network device in the foregoing methods. The apparatus may be a network device, may be an apparatus in the network device, or may be an apparatus that can be collaboratively used with the network device. The apparatus 700 may be a chip system. In this embodiment of this application, the chip system may include a chip, or may include a chip and another discrete component. The apparatus 700 includes at least one processor 710, configured to implement the functions of the network device in the methods provided in embodiments of this application. The apparatus 700 may further include a transceiver 720.

The apparatus 700 may be specifically configured to perform a related method performed by the network device in the foregoing method embodiments. For example, the transceiver 720 may be configured to send first indication information, wherein the first indication information indicates a time-frequency resource position of a first SIB1-PDCCH and an additional SIB1-PDCCH; or may be configured to send second indication information, where the second indication information indicates whether the additional SIB1-PDCCH is transmitted. The processor 710 may be configured to determine the time-frequency resource position of the first SIB1-PDCCH and the additional SIB1-PDCCH.

It should be noted that in specific implementation, for function implementation of each module of the apparatus 700, refer to descriptions of related method steps in the foregoing method embodiments. For brevity of the specification, details are not described herein again.

The apparatus 700 may further include at least one memory 730, configured to store program instructions and/or data. The memory 730 is coupled to the processor 710. The coupling in this embodiment of this application may be an indirect coupling or a communication connection between apparatuses, units, or modules. The coupling may be implemented in electronic, mechanical, and other forms, and is used for information exchange between the apparatuses, the units, or the modules. The processor 710 may cooperate with the memory 730. The processor 710 may execute the program instructions stored in the memory 730. In a possible implementation, at least one of the at least one memory may be integrated with the processor. In another possible implementation, the memory 730 is located outside the apparatus 700.

A specific connection medium between the transceiver 720, the processor 710, and the memory 730 is not limited in this embodiment of this application. In this embodiment of this application, in FIG. 7, the memory 730, the processor 710, and the transceiver 720 are connected through a bus 740, and the bus is represented by a bold line in FIG. 7. A connection manner between other parts is merely an example for description, and does not impose a limitation. The bus may be classified into an address bus, a data bus, a control bus, and the like. For ease of representation, only one bold line is used for representation in FIG. 7, but this does not mean that there is only one bus or only one type of bus.

In this embodiment of this application, the processor 710 may be one or more central processing units (Central Processing Units, CPUs). When the processor 710 is one CPU, the CPU may be a single-core CPU or a multicore CPU. The processor 710 may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

In this embodiment of this application, the memory 730 may include but is not limited to a non-volatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), a portable read-only memory (Compact Disc Read-Only Memory, CD-ROM), or the like. The memory is any other medium that can carry or store expected program code in a form of an instruction or a data structure and that can be accessed by a computer, but is not limited thereto. The memory 730 in embodiments of this application may alternatively be a circuit or any other apparatus that can implement a storage function, and is configured to store the program instructions and/or the data.

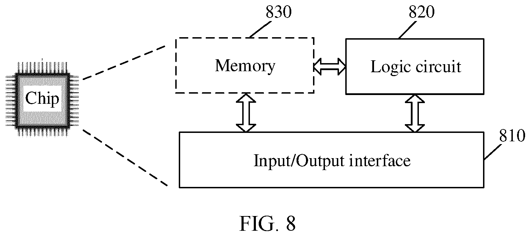

As shown in to FIG. 8, an embodiment of this application further provides an apparatus 800, configured to implement the functions of the terminal device and the network device in the foregoing methods. The apparatus 800 may be a communication apparatus or a chip in the communication apparatus. The apparatus includes:
at least one input/output interface 810 and a logic circuit 820. The input/output interface 810 may be an input/output circuit. The logic circuit 820 may be a signal processor, a chip, or another integrated circuit that can implement the methods in this application.

The apparatus 800 may further include at least one memory 830, configured to store program instructions and/or data. The memory 830 is coupled to the logic circuit 820. The coupling in this embodiment of this application may be an indirect coupling or a communication connection between apparatuses, units, or modules. The coupling may be implemented in electronic, mechanical, and other forms, and is used for information exchange between the apparatuses, the units, or the modules. The logic circuit 820 may cooperate with the memory 830. The logic circuit 820 may execute the program instructions stored in the memory 830. In a possible implementation, at least one of the at least one memory may be integrated with the logic circuit. In another possible implementation, the memory 830 is located outside the apparatus 800.

The at least one input/output interface 810 is configured to input or output a signal or data.

For example, when the apparatus is a terminal device or is used for a terminal device, in an embodiment, the input/output interface 810 is configured to input first indication information, where the first indication information indicates a time-frequency resource position of a first SIB1-PDCCH and an additional SIB1-PDCCH; and the input/output interface 810 is further configured to input second indication information, where the second indication information indicates whether the additional SIB1-PDCCH or an extended SIB1-PDCCH is transmitted.

For example, when the apparatus is a network device, in an embodiment, the input/output interface 810 is configured to output first indication information, where the first indication information indicates a time-frequency resource position of an additional SIB1-PDCCH; and the input/output interface 810 is further configured to output second indication information, where the second indication information indicates whether the additional SIB1-PDCCH or an extended SIB1-PDCCH is transmitted.

The logic circuit 820 is configured to perform a part or all of the steps in any one of the methods provided in embodiments of this application. The logic circuit may implement functions implemented by the processing unit 520a in the apparatus 500a, the processing unit 520b in the apparatus 500b, the processor 620 in the apparatus 600, and the processor 710 in the apparatus 700.

When the apparatus is a chip used in a terminal device, the chip in the terminal device implements functions of the terminal device in the foregoing method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the apparatus is a chip used in a network device, the chip in the network device implements functions of the network device in the foregoing method embodiments. The chip in the network device receives information from another module (for example, a radio frequency module or an antenna) in the network device, where the information is sent by a terminal device to the network device. Alternatively, the chip in the network device sends information to another module (for example, a radio frequency module or an antenna) in the network device, where the information is sent by the network device to a terminal device.

Based on a same concept as the foregoing method embodiments, an embodiment of this application further provides a computer-readable storage medium. The computer-readable storage medium stores a computer program. The computer program is executed by hardware (for example, a processor), to implement a part or all of the steps in any one of the methods performed by any apparatus in embodiments of this application.

Based on a same concept as the foregoing method embodiments, an embodiment of this application further provides a computer program product including instructions. When the computer program product runs on a computer, the computer is enabled to perform a part or all of the steps in any one of the methods in the foregoing aspects.

Based on a same concept as the foregoing method embodiments, this application further provides a communication system. The communication system may include the foregoing terminal and/or the foregoing network device. The communication system may be configured to implement an operation performed by the terminal device or the network device in any one of the foregoing method embodiments and the possible implementations of the method embodiments. For example, the communication system may have a structure shown in FIG. 1A or FIG. 1B.

A part or all of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, all or a part of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, an optical disc), a semiconductor medium (for example, a solid-state drive), or the like. In the foregoing embodiments, the description of each embodiment has respective focuses. For a part that is not described in detail in an embodiment, refer to related descriptions in other embodiments.

In the foregoing embodiments, the description of each embodiment has respective focuses. For a part that is not described in detail in an embodiment, refer to related descriptions in other embodiments.

In the several embodiments provided in this application, it should be understood that the disclosed apparatuses may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual indirect couplings or direct couplings or communication connections may be implemented by using some interfaces. The indirect couplings or communication connections between the apparatuses or units may be implemented in electronic or other forms.

The units described as separate parts may or may not be physically separate, and parts displayed as units may or may not be physical units, may be located in one location, or may be distributed on a plurality of network units. Some or all of the units may be selected according to actual needs to achieve the objectives of the solutions of embodiments.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technologies, or all or a part of the technical solutions may be implemented in a form of a software product. The computer software product is stored in a storage medium and includes several instructions for instructing a computer device (which may be a personal computer, a server, a network device, or the like) to perform all or a part of the steps of the methods described in embodiments of this application.

The foregoing description is merely some specific implementations of this application, but is not intended to limit the protection scope of this application. Any person skilled in the art may make changes and modifications to these embodiments within the technical scope disclosed in this application. Therefore, the following claims are intended to be construed as to cover the foregoing embodiments and to indicate changes and modifications falling within the scope of this application. Therefore, the protection scope of this application shall be subject to the protection scope of the claims.

**Claims**

1. A physical downlink control channel transmission method, wherein the method comprises:

    obtaining first indication information, wherein the first indication information indicates a time-frequency resource position of a first system information block 1 physical downlink control channel SIB1-PDCCH and an additional SIB1-PDCCH; and
    determining the time-frequency resource position of the first SIB1-PDCCH and the additional SIB1-PDCCH based on the first indication information.

2. The method according to claim 1, wherein the method further comprises:

    detecting the first SIB 1-PDCCH and the additional SIB 1-PDCCH based on the first indication information; and
    obtaining a system information block 1 SIB1 based on the detected first SIB1-PDCCH and the additional SIB1-PDCCH.

3. The method according to claim 1 or 2, wherein the time-frequency resource position of the first SIB 1-PDCCH and the additional SIB 1-PDCCH comprises: a time-frequency resource position of the first SIB 1-PDCCH and a time-frequency resource position of the additional SIB1-PDCCH; or an overall time-frequency resource position of the first SIB1-PDCCH and the additional SIB1-PDCCH.

4. The method according to any one of claims 1 to 3, wherein the first indication information comprises one or more offsets, and the offset indicates an offset of the time-frequency resource position of the additional SIB 1-PDCCH relative to the time-frequency resource position of the first SIB 1-PDCCH; or the offset indicates an offset of the time-frequency resource position of the additional SIB1-PDCCH relative to a time-frequency resource position of a synchronization signal block SSB; and
    one or more time-frequency resource positions of the additional SIB1-PDCCH are obtained based on the one or more offsets.

5. The method according to any one of claims 1 to 4, wherein a quantity of symbols occupied in time domain at the overall time-frequency resource position of the first SIB 1-PDCCH and the additional SIB 1-PDCCH is greater than a quantity of symbols occupied by the first SIB1-PDCCH in time domain, and a quantity of resource blocks RBs occupied in frequency domain is greater than or equal to a quantity of RBs occupied by the first SIB1-PDCCH in frequency domain; or a quantity of RBs occupied in frequency domain at the overall time-frequency resource position of the first SIB1-PDCCH and the additional SIB1-PDCCH is greater than a quantity of RBs occupied by the first SIB1-PDCCH in frequency domain, and a quantity of symbols occupied in time domain is greater than or equal to a quantity of symbols occupied by the first SIB 1-PDCCH in time domain.

6. The method according to claim 1 or 5, wherein a time domain resource occupied by the first SIB1-PDCCH and the additional SIB 1-PDCCH as a whole is at least one of symbols whose index numbers are 0 to 2.

7. The method according to any one of claims 1 to 6, wherein the first indication information is carried on a physical broadcast channel PBCH.

8. The method according to any one of claims 1 to 7, wherein a specific SSB signal is received, and the specific SSB signal carries the first indication information.

9. The method according to claim 8, wherein the specific SSB signal comprises at least one of the following information: a primary synchronization signal of a specific sequence, a secondary synchronization signal of a specific sequence, a PBCH demodulation reference signal of a specific sequence, a special SSB structure, a special SSB time-frequency position, a synchronization signal SS of a specific frequency offset, or a PBCH of a specific frequency offset.

10. The method according to any one of claims 1 to 9, wherein the additional SIB1-PDCCH is transmitted by default on a predetermined frequency band or frequency.

11. The method according to any one of claims 1 to 10, wherein second indication information is obtained, and the second indication information indicates whether the additional SIB 1-PDCCH is transmitted.

12. The method according to any one of claims 1 to 11, wherein a detection periodicity of the additional SIB1-PDCCH is the same as a detection periodicity of the first SIB 1-PDCCH.

13. The method according to any one of claims 1 to 12, wherein the additional SIB 1-PDCCH and the first SIB1-PDCCH carry corresponding scheduling information, and the corresponding scheduling information comprises one or more of the following information: a frequency domain resource of a physical downlink shared channel PDSCH, a time domain resource of the PDSCH, a code rate of the PDSCH, a modulation order of the PDSCH, and a redundancy version of the PDSCH.

14. The method according to any one of claims 1 to 13, wherein the additional SIB1-PDCCH and the first SIB1-PDCCH jointly carry the scheduling information carried by the first SIB1-PDCCH.

15. The method according to any one of claims 1 to 14, wherein the additional SIB1-PDCCH and the first SIB1-PDCCH are in a quasi co-located QCL relationship;

   the additional SIB 1-PDCCH and an SSB corresponding to the first SIB 1-PDCCH are in a QCL relationship; or
   the additional SIB1-PDCCH and the specific SSB signal are in a QCL relationship.

16. A physical downlink control channel transmission method, wherein the method comprises:

   determining a time-frequency resource position of a first system information block 1 physical downlink control channel SIB1-PDCCH and an additional SIB1-PDCCH; and
   sending first indication information, wherein the first indication information indicates the time-frequency resource position of the first SIB1-PDCCH and the additional SIB1-PDCCH.

17. The method according to claim 16, wherein the time-frequency resource position of the first SIB1-PDCCH and the additional SIB1-PDCCH comprises: a time-frequency resource position of the first SIB1-PDCCH and a time-frequency resource position of the additional SIB1-PDCCH; or an overall time-frequency resource position of the first SIB1-PDCCH and the additional SIB1-PDCCH.

18. The method according to claim 16 or 17, wherein the first indication information comprises one or more offsets, and the offset indicates an offset of the time-frequency resource position of the additional SIB1-PDCCH relative to the time-frequency resource position of the first SIB 1-PDCCH; or the offset indicates an offset of the time-frequency resource position of the additional SIB1-PDCCH relative to a time-frequency resource position of a synchronization signal block SSB.

19. The method according to claim 16 or 17, wherein a quantity of symbols occupied in time domain at the overall time-frequency resource position of the first SIB 1-PDCCH and the additional SIB 1-PDCCH is greater than a quantity of symbols occupied by the first SIB1-PDCCH in time domain, and a quantity of resource blocks RBs occupied in frequency domain is greater than or equal to a quantity of RBs occupied by the first SIB1-PDCCH in frequency domain; or a quantity of RBs occupied in frequency domain at the overall time-frequency resource position of the first SIB1-PDCCH and the additional SIB1-PDCCH is greater than a quantity of RBs occupied by the first SIB1-PDCCH in frequency domain, and a quantity of symbols occupied in time domain is greater than or equal to a quantity of symbols occupied by the first SIB 1-PDCCH in time domain.

20. The method according to claim 16 or 19, wherein a time domain resource occupied by the first SIB1-PDCCH and the additional SIB 1-PDCCH as a whole is at least one of symbols whose index numbers are 0 to 2.

21. The method according to any one of claims 16 to 20, wherein a physical broadcast channel PBCH carries the first indication information.

22. The method according to any one of claims 16 to 21, wherein a specific SSB signal is sent, and the specific SSB signal carries the first indication information.

23. The method according to claim 22, wherein the specific SSB signal comprises at least one of the following information: a primary synchronization signal of a specific sequence, a secondary synchronization signal of a specific sequence, a PBCH demodulation reference signal of a specific sequence, a special SSB structure, a special SSB time-frequency position, a synchronization signal SS of a specific frequency offset, or a PBCH of a specific frequency offset.

24. The method according to any one of claims 16 to 23, wherein the additional SIB1-PDCCH is transmitted by default on a predetermined frequency band or frequency.

25. The method according to any one of claims 16 to 24, wherein second indication information is sent, and the second indication information indicates whether the additional SIB 1-PDCCH is transmitted.

26. The method according to any one of claims 16 to 25, wherein a sending periodicity of the additional SIB1-PDCCH is the same as a sending periodicity of the first SIB1-PDCCH.

27. The method according to any one of claims 16 to 26, wherein the additional SIB1-PDCCH and the first SIB1-PDCCH carry corresponding scheduling information, and the corresponding scheduling information comprises one or more of the following information: a frequency domain resource of a physical downlink shared channel PDSCH, a time domain resource of the PDSCH, a code rate of the PDSCH, a modulation order of the PDSCH, and a redundancy version of the PDSCH.

28. The method according to any one of claims 16 to 27, wherein the additional SIB1-PDCCH and the first SIB1-PDCCH jointly carry the scheduling information carried by the first SIB1-PDCCH.

29. The method according to any one of claims 16 to 28, wherein the additional SIB1-PDCCH and the first SIB1-PDCCH are in a quasi co-located QCL relationship;

the additional SIB1-PDCCH and an SSB corresponding to the first SIB1-PDCCH are in a QCL relationship; or the additional SIB1-PDCCH and the specific SSB signal are in a QCL relationship.

30. A terminal device, wherein the terminal device comprises:

a transceiver unit, configured to obtain first indication information, wherein the first indication information indicates a time-frequency resource position of a first system information block 1 physical downlink control channel SIB1-PDCCH and an additional SIB1-PDCCH; and
a processing unit, configured to determine the time-frequency resource position of the first SIB1-PDCCH and the additional SIB 1-PDCCH based on the first indication information.

31. The terminal device according to claim 30, wherein the processing unit is further configured to detect the first SIB1-PDCCH and the additional SIB1-PDCCH based on the first indication information; and the processing unit is further configured to obtain a system information block 1 SIB1 based on the detected first SIB1-PDCCH and the additional SIB1-PDCCH.

32. The terminal device according to claim 30 or 31, wherein the time-frequency resource position of the first SIB1-PDCCH and the additional SIB1-PDCCH comprises: a time-frequency resource position of the first SIB1-PDCCH and a time-frequency resource position of the additional SIB 1-PDCCH; or an overall time-frequency resource position of the first SIB1-PDCCH and the additional SIB1-PDCCH.

33. The terminal device according to any one of claims 30 to 32, wherein the first indication information comprises one or more offsets, and the offset indicates an offset of the time-frequency resource position of the additional SIB1-PDCCH relative to the time-frequency resource position of the first SIB1-PDCCH; or the offset indicates an offset of the time-frequency resource position of the additional SIB 1-PDCCH relative to a time-frequency resource position of a synchronization signal block SSB; and

the processing unit obtains one or more time-frequency resource positions of the additional SIB 1-PDCCH based on the one or more offsets.

34. The terminal device according to any one of claims 30 to 33, wherein a quantity of symbols occupied in time domain at the overall time-frequency resource position of the first SIB 1-PDCCH and the additional SIB 1-PDCCH is greater than a quantity of symbols occupied by the first SIB1-PDCCH in time domain, and a quantity of resource blocks RBs occupied in frequency domain is greater than or equal to a quantity of RBs occupied by the first SIB1-PDCCH in frequency domain; or a quantity of RBs occupied in frequency domain at the overall time-frequency resource position of the first SIB 1-PDCCH and the additional SIB 1-PDCCH is greater than a quantity of RBs occupied by the first SIB 1-PDCCH in frequency domain, and a quantity of symbols occupied in time domain is greater than or equal to a quantity of symbols occupied by the first SIB 1-PDCCH in time domain.

35. The terminal device according to claim 30 or 34, wherein a time domain resource occupied by the first SIB1-PDCCH and the additional SIB 1-PDCCH as a whole is at least one of symbols whose index numbers are 0 to 2.

36. The terminal device according to any one of claims 30 to 35, wherein the first indication information is carried on a physical broadcast channel PBCH.

37. The terminal device according to any one of claims 30 to 36, wherein the transceiver unit receives a specific SSB signal, and the specific SSB signal carries the first indication information.

38. The terminal device according to claim 37, wherein the specific SSB signal comprises at least one of the following information:
a primary synchronization signal of a specific sequence, a secondary synchronization signal of a specific sequence, a PBCH demodulation reference signal of a specific sequence, a special SSB structure, a special SSB time-frequency position, a synchronization signal SS of a specific frequency offset, or a PBCH of a specific frequency offset.

39. The terminal device according to any one of claims 30 to 38, wherein the additional SIB1-PDCCH is transmitted by default on a predetermined frequency band or frequency.

40. The terminal device according to any one of claims 30 to 39, wherein the transceiver unit obtains second indication information, and the second indication information indicates whether the additional SIB1-PDCCH is transmitted.

41. The terminal device according to any one of claims 30 to 40, wherein a detection periodicity of the additional SIB 1-PDCCH is the same as a detection periodicity of the first SIB 1-PDCCH.

42. The terminal device according to any one of claims 30 to 41, wherein the additional SIB1-PDCCH and the first SIB1-PDCCH carry corresponding scheduling information, and the corresponding scheduling information comprises one or more of the following information: a frequency domain resource of a physical downlink shared channel PDSCH, a time domain resource of the PDSCH, a code rate of the PDSCH, a modulation order of the PDSCH, and a redundancy version of the PDSCH.

43. The terminal device according to any one of claims 30 to 42, wherein the additional SIB1-PDCCH and the first SIB1-PDCCH jointly carry the scheduling information carried by the first SIB1-PDCCH.

44. The terminal device according to any one of claims 30 to 43, wherein the additional SIB1-PDCCH and the first SIB1-PDCCH are in a quasi co-located QCL relationship;

the additional SIB1-PDCCH and an SSB corresponding to the first SIB1-PDCCH are in a QCL relationship; or the additional SIB1-PDCCH and the specific SSB signal are in a QCL relationship.

45. A network device, wherein the network device comprises:

a processing unit, configured to determine a time-frequency resource position of a first system information block 1 physical downlink control channel SIB1-PDCCH and an additional SIB1-PDCCH; and

a transceiver unit, configured to send first indication information, wherein the first indication information indicates the time-frequency resource position of the first SIB 1-PDCCH and the additional SIB 1-PDCCH.

46. The network device according to claim 45, wherein the time-frequency resource position of the first SIB1-PDCCH and the additional SIB1-PDCCH comprises: a time-frequency resource position of the first SIB1-PDCCH and a time-frequency resource position of the additional SIB 1-PDCCH; or an overall time-frequency resource position of the first SIB 1-PDCCH and the additional SIB 1-PDCCH.

47. The network device according to claim 45 or 46, wherein the first indication information comprises one or more offsets, and the offset indicates an offset of the time-frequency resource position of the additional SIB 1-PDCCH relative to the time-frequency resource position of the first SIB 1-PDCCH; or the offset indicates an offset of the time-frequency resource position of the additional SIB1-PDCCH relative to a time-frequency resource position of a synchronization signal block SSB.

48. The network device according to any one of claims 45 to 47, wherein a quantity of symbols occupied in time domain at the overall time-frequency resource position of the first SIB1-PDCCH and the additional SIB1-PDCCH is greater than a quantity of symbols occupied by the first SIB1-PDCCH in time domain, and a quantity of resource blocks RBs occupied in frequency domain is greater than or equal to a quantity of RBs occupied by the first SIB1-PDCCH in frequency domain; or a quantity of RBs occupied in frequency domain at the overall time-frequency resource position of the first SIB 1-PDCCH and the additional SIB1-PDCCH is greater than a quantity of RBs occupied by the first SIB 1-PDCCH in frequency domain, and a quantity of symbols occupied in time domain is greater than or equal to a quantity of symbols occupied by the first SIB 1-PDCCH in time domain.

49. The network device according to claim 45 or 48, wherein a time domain resource occupied by the first SIB1-PDCCH and the additional SIB 1-PDCCH as a whole is at least one of symbols whose index numbers are 0 to 2.

50. The network device according to any one of claims 45 to 49, wherein a physical broadcast channel PBCH carries the first indication information.

51. The network device according to any one of claims 45 to 50, wherein the transceiver unit sends a specific SSB signal, and the specific SSB signal carries the first indication information.

52. The method according to claim 51, wherein the specific SSB signal comprises at least one of the following information: a primary synchronization signal of a specific sequence, a secondary synchronization signal of a specific sequence, a PBCH demodulation reference signal of a specific sequence, a special SSB structure, a special SSB time-frequency position, a synchronization signal SS of a specific frequency offset, or a PBCH of a specific frequency offset.

53. The network device according to any one of claims 45 to 52, wherein the additional SIB1-PDCCH is transmitted by default on a predetermined frequency band or frequency.

54. The network device according to any one of claims 45 to 53, wherein the transceiver unit sends second indication information, and the second indication information indicates whether the additional SIB1-PDCCH is transmitted.

55. The network device according to any one of claims 45 to 54, wherein a sending periodicity of the additional SIB 1-PDCCH is the same as a sending periodicity of the first SIB 1-PDCCH.

56. The network device according to any one of claims 45 to 55, wherein the additional SIB1-PDCCH and the first SIB1-PDCCH carry corresponding scheduling information, and the corresponding scheduling information comprises one or more of the following information: a frequency domain resource of a physical downlink shared channel PDSCH, a time domain resource of the PDSCH, a code rate of the PDSCH, a modulation order of the PDSCH, and a redundancy version of the PDSCH.

57. The network device according to any one of claims 45 to 56, wherein the additional SIB1-PDCCH and the first SIB 1-PDCCH jointly carry the scheduling information carried by the first SIB1-PDCCH.

58. The network device according to any one of claims 45 to 57, wherein the additional SIB1-PDCCH and the first SIB1-PDCCH are in a quasi co-located QCL relationship;

the additional SIB1-PDCCH and an SSB corresponding to the first SIB1-PDCCH are in a QCL relationship; or
the additional SIB1-PDCCH and the specific SSB signal are in a QCL relationship.

59. A chip system, comprising a logic circuit and an input/output interface, wherein the input/output interface is configured to input first indication information, and the logic circuit is configured to perform the method according to any one of claims 1 to 15.

60. A chip system, comprising a logic circuit and an input/output interface, wherein the input/output interface is configured to output first indication information, and the logic circuit is configured to perform the method according to any one of claims 16 to 29.

61. A communication apparatus, comprising at least one processor and a transceiver, wherein the transceiver is configured to:
receive or send data or a signal, wherein the at least one processor is configured to perform an action to enable the communication apparatus to perform the method according to any one of claims 1 to 15 or 16 to 29.

62. The communication apparatus according to claim 61, wherein the communication apparatus further comprises a memory, the memory is coupled to the processor, the memory is configured to store a computer program, and when the computer program is executed by the processor, the method according to any one of claims 1 to 15 or 16 to 29 is performed.

63. A computer-readable storage medium, wherein the computer-readable storage medium stores a computer program, and when the computer program is executed by a computer, the method according to any one of claims 1 to 15 or 16 to 29 is performed.

64. A computer program product, wherein when the computer program product runs on a computer, the method according to any one of claims 1 to 15 or 16 to 29 is performed.

65. A communication system, wherein the communication system comprises a terminal device and a network device, the terminal device is configured to perform the method according to claims 1 to 15, and the network device is configured to perform the method according to claims 16 to 29.

FIG. 1A

FIG. 1B

FIG. 1C-1

FIG. 1C-2

```
┌─────────────────────┐                          ┌─────────────────────┐
│                     │                          │                     │
│   Network device    │                          │   Terminal device   │
│                     │                          │                     │
└─────────────────────┘                          └─────────────────────┘
```

201a: Send second indication information,
where the second indication information
indicates whether an additional SIB1-PDCCH
or an extended SIB1-PDCCH is transmitted

201: Determine a time-
frequency resource position
of a first SIB1-PDCCH and
the additional SIB1-PDCCH

202: Send first indication information,
where the first indication information
indicates the time-frequency resource
position of the first SIB1-PDCCH and
the additional SIB1-PDCCH

203: Detect the first SIB1-PDCCH and the
additional SIB1-PDCCH based on the first
indication information

204: Obtain a system information block 1
SIB1 based on the detected first SIB1-PDCCH
and the additional SIB1-PDCCH

FIG. 2

35

FIG. 3A

RB

Remaining part of the
additional SIB1-PDCCH

First SIB1-PDCCH

Part of an
additional
SIB1-
PDCCH

Remaining part of the
additional SIB1-PDCCH

Symbol (Symbol)

FIG. 3B

FIG. 3C

FIG. 3D

RB

First SIB1-
PDCCH

Part of an
additional
SIB1-
PDCCH

Remaining
part of the
additional
SIB1-
PDCCH

Symbol (Symbol)

FIG. 3E

FIG. 3F

RB

Remaining part of the additional SIB1-PDCCH

First SIB1-PDCCH

Part of an additional SIB1-PDCCH

Remaining part of the additional SIB1-PDCCH

Symbol (Symbol)

FIG. 3G

FIG. 3H

FIG. 3I

FIG. 3J

FIG. 3K

FIG. 3L

FIG. 4

500a

520a

| Processing unit | Transceiver unit |
|---|---|
| SIB1-PDCCH detection unit | First indication information obtaining unit |
| System information block 1 SIB1 obtaining unit | Second indication information obtaining unit |

510a

5101a

5102a

5201a

5202a

FIG. 5A

500b

520b

| Processing unit | |
|---|---|
| First SIB1-PDCCH and additional SIB1-PDCCH time-frequency resource determining unit | Transceiver unit |
| Second indication information determining unit | |

510b

5201b

5202b

FIG. 5B

FIG. 6

FIG. 7

830                          820

┌ ─ ─ ─ ─ ─ ─ ─ ┐        ┌─────────────┐
│               │        │             │
        Chip      Memory  ⟺   Logic circuit
│               │        │             │
└ ─ ─ ─ ─ ─ ─ ─ ┘        └─────────────┘
         ⇕                      ⇕
┌──────────────────────────────────────┐  810
│          Input/Output interface        │
└──────────────────────────────────────┘

FIG. 8

## INTERNATIONAL SEARCH REPORT

| | International application No. |
|---|---|
| | **PCT/CN2020/116264** |

**A. CLASSIFICATION OF SUBJECT MATTER**

H04W 72/04(2009.01)i

According to International Patent Classification (IPC) or to both national classification and IPC

**B. FIELDS SEARCHED**

Minimum documentation searched (classification system followed by classification symbols)

H04W;H04Q

Documentation searched other than minimum documentation to the extent that such documents are included in the fields searched

Electronic data base consulted during the international search (name of data base and, where practicable, search terms used)

CNKI; CNPAT; WPI; EPODOC; 3GPP: 附加, 额外, 补充, 系统信息块, 系统消息块, 物理下行控制信道, PDCCH, 第二, SIB?, 指示, 时频, 覆盖, extra, additional, supplyment+, system information block, second, time, frequency, overlay, coverage

**C. DOCUMENTS CONSIDERED TO BE RELEVANT**

| Category* | Citation of document, with indication, where appropriate, of the relevant passages | Relevant to claim No. |
|---|---|---|
| Y | ALCATEL-LUCENT et al. "Options for LC-MTC UE SIB Transmission" *3GPP TSG-WG RAN2#89, R2-150467*, 13 February 2015 (2015-02-13), sections 2-3 | 1-65 |
| Y | NTT DOCOMO, INC. "Potential UE complexity reduction features for RedCap" *3GPP TSG RAN WG1 #101, R1-2004421*, 05 June 2020 (2020-06-05), section 2 | 1-65 |
| A | CN 101998418 A (DATANG MOBILE COMMUNICATIONS EQUIPMENT CO., LTD.) 30 March 2011 (2011-03-30) entire document | 1-65 |
| A | CN 109936871 A (HUAWEI TECHNOLOGIES CO., LTD.) 25 June 2019 (2019-06-25) entire document | 1-65 |
| A | CN 108282303 A (BEIJING SAMSUNG TELECOM R&D CENTER et al.) 13 July 2018 (2018-07-13) entire document | 1-65 |
| A | US 2020045658 A1 (SAMSUNG ELECTRONICS CO., LTD.) 06 February 2020 (2020-02-06) entire document | 1-65 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 April 2021** | **26 May 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2020/116264** |

| C. | DOCUMENTS CONSIDERED TO BE RELEVANT | |
| --- | --- | --- |
| Category* | Citation of document, with indication, where appropriate, of the relevant passages | Relevant to claim No. |
| A | CN 102104965 A (ZTE CORPORATION) 22 June 2011 (2011-06-22)<br>entire document | 1-65 |
| A | US 2014050127 A1 (INTEL CORPORATION) 20 February 2014 (2014-02-20)<br>entire document | 1-65 |

Form PCT/ISA/210 (second sheet) (January 2015)

## INTERNATIONAL SEARCH REPORT
### Information on patent family members

International application No.

**PCT/CN2020/116264**

| Patent document cited in search report | | | Publication date (day/month/year) | Patent family member(s) | | | Publication date (day/month/year) |
|---|---|---|---|---|---|---|---|
| CN | 101998418 | A | 30 March 2011 | None | | | |
| CN | 109936871 | A | 25 June 2019 | WO | 2019120176 | A1 | 27 June 2019 |
| CN | 108282303 | A | 13 July 2018 | WO | 2018128446 | A1 | 12 July 2018 |
| | | | | RU | 2732508 | C1 | 18 September 2020 |
| | | | | EP | 3556164 | A1 | 23 October 2019 |
| | | | | KR | 20190095932 | A | 16 August 2019 |
| US | 2020045658 | A1 | 06 February 2020 | KR | 20180080700 | A | 12 July 2018 |
| | | | | CN | 110168972 | A | 23 August 2019 |
| | | | | EP | 3539232 | A1 | 18 September 2019 |
| | | | | US | 2018192383 | A1 | 05 July 2018 |
| | | | | CA | 3049195 | A1 | 12 July 2018 |
| | | | | JP | 2020504971 | A | 13 February 2020 |
| CN | 102104965 | A | 22 June 2011 | None | | | |
| US | 2014050127 | A1 | 20 February 2014 | CN | 103583006 | A | 12 February 2014 |
| | | | | WO | 2012134579 | A1 | 04 October 2012 |
| | | | | EP | 2695314 | A1 | 12 February 2014 |

Form PCT/ISA/210 (patent family annex) (January 2015)